# EUROPEAN PATENT APPLICATION

(11) **EP 4 195 795 A1**
(43) Date of publication of application: **14.06.2023**
(21) Application number: 21852654.9
(22) Date of filing: 04.08.2021
(51) Int. Cl.: H04W 56/00

(54) **INFORMATION REPORTING METHOD, INFORMATION RECEIVING METHOD, AND RELATED DEVICE**

(30) Priority: 06.08.2020 CN 202010785776
(71) Applicant: Vivo Mobile Communication Co., Ltd., Dongguan, Guangdong 523863 (CN)
(72) Inventor: YANG, Yu, Dongguan, Guangdong 523863 (CN)
(74) Representative: Lavoix
(86) International application number: PCT/CN2021/110512
(87) International publication number: WO 2022/028465

(57) **Abstract**

The present application discloses an information reporting method, an information receiving method, and related devices, belonging to the technical field of communications. The information reporting method includes: reporting target information to a network-side device, where the target information includes first information, and the first information corresponds to M pieces of timing information of P objects, where the objects are cells, physical cells, or transmission and reception points TRP, M is a positive integer, and P is a positive integer less than or equal to M.

## Description

### CROSS-REFERENCE TO RELATED APPLICATIONS

The present application claims priority to Chinese Patent Application No. 202010785776.4 filed in China on August 06, 2020, which is incorporated herein by reference in its entirety.

### TECHNICAL FIELD

The present application relates to the technical field of communications, and specifically, to an information reporting method, an information receiving method, and related devices.

### BACKGROUND

In the prior art, when a terminal measures a synchronization signal/physical broadcast channel block (SS/PBCH block, SSB), it is specified in a protocol that the terminal cannot transmit data at one symbol on both sides of SSB measurement timing configurations (SSB Measurement Timing Configurations, SMTC). It can be seen that the above manner only limits the time for measuring the SSB to be within an SMTC window and limits the transmission within a fixed duration on both sides of the window through the protocol. The flexibility of transmission scheduling is relatively low, resulting in relatively poor system performance.

### SUMMARY

The embodiments of the present application provide an information reporting method, an information receiving method, and related devices, which can resolve the problem of relatively poor system performance due to relatively low flexibility of existing transmission scheduling.

According to a first aspect, an information reporting method is provided, performed by a terminal, the method including:
reporting target information to a network-side device, where the target information includes first information, and the first information corresponds to M pieces of timing information of P objects, where
the objects are cells, physical cells, or transmission and reception points TRP, M is a positive integer, and P is a positive integer less than or equal to M.

According to a second aspect, an information receiving method is provided, performed by a network-side device, the method including:
receiving target information reported by a terminal, where the target information includes first information, and the first information corresponds to M pieces of timing information of P objects, where
the objects are cells, physical cells, or transmission and reception points TRP, M is a positive integer, and P is a positive integer less than or equal to M.

According to a third aspect, an information reporting apparatus is provided. The information reporting apparatus includes:
a reporting module, configured to report target information to a network-side device, where the target information includes first information, and the first information corresponds to M pieces of timing information of P objects, where
the objects are cells, physical cells, or transmission and reception points TRP, M is a positive integer, and P is a positive integer less than or equal to M.

According to a fourth aspect, an information receiving apparatus is provided. The information receiving apparatus includes:
a second receiving module, configured to receive target information reported by a terminal, where the target information includes first information, and the first information corresponds to M pieces of timing information of P objects, where
the objects are cells, physical cells, or transmission and reception points TRP, M is a positive integer, and P is a positive integer less than or equal to M.

According to a fifth aspect, a terminal is provided. The terminal includes a processor, a memory, and a program or instructions stored in the memory and runnable on the processor, the program or instructions, when executed by the processor, implementing steps of the method according to the first aspect.

According to a sixth aspect, a network-side device is provided. The network-side device includes a processor, a memory, and a program or instructions stored in the memory and runnable on the processor, the program or instructions, when executed by the processor, implementing steps of the method according to the second aspect.

According to a seventh aspect, a readable storage medium is provided. The readable storage medium stores a program or instructions, the program or instructions, when executed by a processor, implementing steps of the method according to the first aspect, or implementing steps of the method according to the second aspect.

According to an eighth aspect, a chip is provided. The chip includes a processor and a communication interface, the communication interface being coupled to the processor, and the processor being configured to run a program or instructions of a network-side device, to implement the method according to the first aspect, or implement the method according to the second aspect.

According to a ninth aspect, a computer software product is provided. The computer software product is stored in a non-volatile storage medium, and configured to be executed by at least one processor to implement steps of the method according to the first aspect, or implement steps of the method according to the second aspect.

According to a tenth aspect, a communication device is provided. The communication device is configured to perform the method according to the first aspect, or perform the method according to the second aspect.

In the embodiments of the present application, a terminal reports target information to a network-side device, where the target information includes first information, and the first information corresponds to M pieces of timing information of P objects, where the objects are cells, physical cells, or transmission and reception points TRP, M is a positive integer, and P is a positive integer less than or equal to M. In this way, when receiving the target information, the network-side device can accurately acquire a difference between the timing information of the P objects, and then transmission of the terminal can be scheduled according to the difference between the timing information of the P objects, to avoid measurement or data interference between the objects, thereby improving the system performance.

### BRIEF DESCRIPTION OF THE DRAWINGS

FIG. 1 is a block diagram of a wireless communication system to which the embodiments of the present application are applicable;
FIG. 2 is a flowchart of an information reporting method according to an embodiment of the present application;
FIG. 3 is a flowchart of an information receiving method according to an embodiment of the present application;
FIG. 4 is a structural diagram of an information reporting apparatus according to an embodiment of the present application;
FIG. 5 is a structural diagram of an information receiving apparatus according to an embodiment of the present application;
FIG. 6 is a structural diagram of a communication device according to an embodiment of the present application;
FIG. 7 is a structural diagram of a terminal according to an embodiment of the present application; and
FIG. 8 is a structural diagram of a network-side device according to an embodiment of the present application.

### DETAILED DESCRIPTION

The following clearly and completely describes the technical solutions in the embodiments of the present application with reference to the accompanying drawings in the embodiments of the present application. Apparently, the described embodiments are some rather than all of the embodiments of the present application. All other embodiments obtained by a person skilled in the art based on the embodiments of the present application without creative efforts shall fall within the protection scope of the present application.

The terms such as "first" and "second" in the specification and the claims of the present application are intended to distinguish between similar objects, but are not used for describing a specific sequence or a chronological order. It is to be understood that the data termed in such a way are interchangeable in appropriate circumstances, so that the embodiments of the present application can be implemented in orders other than the order illustrated or described herein. In addition, the objects distinguished by "first" and "second" are generally of one type, and the quantity of the objects is not limited. For example, there may be one or more first objects. In addition, "and/or" used in the specification and the claims represents at least one of the connected objects, and the character "/" generally indicates an "or" relationship between the associated objects.

It is to be noted that the technologies described in the embodiments of the present application are not limited to the Long Term Evolution (Long Term Evolution, LTE)/LTE-advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and other systems. The terms "system" and "network" may be used interchangeably in the embodiments of the present application. The described technologies can be applied to the systems and radio technologies mentioned above, and can also be applied to other systems and radio technologies. However, the following description describes the new radio (New Radio, NR) system for example purposes, and NR terminology is used in most of the following descriptions. These technologies can also be applied to applications other than NR system applications, for example, the 6th generation (6th Generation, 6G) communication system.

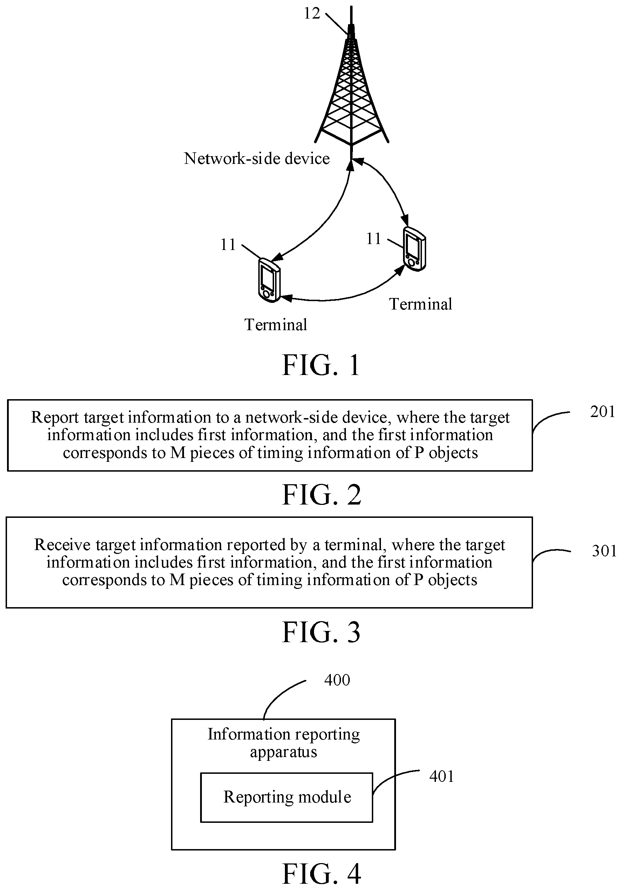

FIG. 1 is a block diagram of a wireless communication system to which the embodiments of the present application are applicable. The wireless communication system includes a terminal 11 and a network-side device 12.

The terminal 11 may also be referred to as a terminal device or a user terminal (User Equipment, UE). The terminal 11 may be a terminal-side device such as a mobile phone, a tablet computer (Tablet Personal Computer), a laptop computer (Laptop Computer), or referred to as a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), a wearable device (Wearable Device) or a vehicle user equipment (vehicle user equipment, VUE), or a pedestrian user equipment (pedestrian user equipment, PUE), where the wearable device includes: a bracelet, a headset, glasses, or the like. It should be noted that a specific type of the terminal 11 is not limited in the embodiments of the present application.

The network-side device 12 may be a base station, a core network, or a transmission and reception point (Transmission and Reception Point, TRP). The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (evolved Node B, eNB), a home Node B, a home evolved Node B, a wireless local area network (wireless local area network, WLAN) access point, a wireless fidelity (wireless fidelity, WiFi) node, a transmission and reception point (TRP), or another appropriate term in the field. Provided that the same technical effects are achieved, the base station is not limited to a specific technical term.

To facilitate understanding, the following explains some content involved in the embodiments of the present invention.

### 1. Multi-antenna.

The massive multiple input multiple output (massive Multiple Input Multiple Output, Massive MIMO) technology uses large-scale antenna arrays, which can greatly improve the efficiency of system frequency band utilization and support a larger quantity of access users. Therefore, major research organizations regard the Massive MIMO technology as one of the most potential physical layer technologies in the next-generation mobile communication system.

In the Massive MIMO technology, if an all-digital array is used, the maximized spatial resolution and optimal multi-user MIMO (multi-user MIMO, MU-MIMO) performance can be achieved, but this structure requires a large quantity of analog-to-digital (Analogue-to-Digital, AD) conversions/digital-to-analogue (Digital-to-Analogue, DA) conversion devices and a large quantity of complete radio frequency-baseband processing channels. Both the device cost and baseband processing complexity will be a huge burden.

To avoid the foregoing implementation cost and device complexity, the digital-analogue hybrid beamforming technology came into being. That is, based on the conventional digital domain beamforming, a level of beamforming-analogue beamforming (or analogue forming) is added to the radio frequency signal near the front end of the antenna system. Analogue forming can achieve relatively rough matching between transmitted signals and channels in a relatively simple manner. The dimension of the equivalent channel formed after analogue forming is less than the actual quantity of antennas, so that the subsequent required AD/DA conversion devices, the quantity of digital channels, and the corresponding baseband processing complexity can be greatly reduced. The residual interference of the analogue forming part can be processed again in the digital domain, to ensure the quality of MU-MIMO transmission. Compared with all-digital forming, digital-analogue hybrid beamforming is a compromise between the performance and the complexity, and has a relatively good practical prospect in systems with a high frequency band and a large bandwidth or with a large quantity of antennas.

### 2. High frequency band.

The high frequency band has relatively abundant idle frequency resources, which can provide greater throughput for data transmission. The wavelength of a high-frequency signal is short. Compared with a low-frequency band, more antenna array elements can be deployed on an antenna panel of the same size, and the beamforming technology can be used to form beams with stronger directivity and narrower lobes. Therefore, the combination of large-scale antennas and high-frequency communication is also one of the future trends.

### 3. About beam measurement and beam reporting (beam measurement and beam reporting).

The analogue beamforming is transmitted in full bandwidth, and array elements in each polarization direction on the panel of each high-frequency antenna array can only transmit analogue beams in a time-division multiplexed manner. The forming weight of the analogue beam is realized by adjusting parameters of devices such as a radio frequency front-end phase shifter.

The training of a simulated beamforming vector is usually performed in a polling manner. That is, array elements in each polarization direction of each antenna panel sequentially transmit a training signal (that is, a candidate forming vector) at an agreed time in a time-division multiplexing manner, the terminal feeds back a beam report after measurement, and the training signal is used by the network-side device to implement simulated beam transmission in the next service transmission. The content of the beam report usually includes several optimal transmit beam identifiers and measured received power of each transmit beam.

During beam measurement, the network is configured with a reference signal resource set (Reference Signal resource set, RS resource set), which includes at least one reference signal resource (RS resource), such as a synchronization signal/physical broadcast channel block (SS/PBCH block, SSB) resource or channel state information reference signal (Channel State Information Reference Signal, CSI-RS) resource. The UE measures a layer 1-reference signal received power (Layer 1-Reference Signal Received Power, L1-RSRP)/layer 1-signal-to-noise and interference ratio (Layer 1-Signal-to-Noise and Interference Ratio, L1-SINR), and reports at least one optimal measurement result to the network, where the report content includes a synchronization signal block resource indicator (SSB Resource Indicator, SSBRI) or channel state information reference signal resource indicator (CSI-RS Resource Indicator, CRI), and the corresponding L1-RSRP/L1-SINR. The report content reflects at least one optimal beam and its quality, for the network to determine beam information for transmitting channels or signals with the UE.

### 4. Radio resource management (Radio Resource Management, RRM) measurement mechanism.

During RRM measurement, the LTE measures a reference signal of a neighboring cell, and determines, based on the reference signal, whether to perform cell handover. To avoid short-term fluctuations in a measurement result, a series of uniformly distributed measurement samples are usually averaged during a measurement period, which may be referred to as high-level (such as layer 3: L3) measurement.

When the reference signal SSB of an adjacent cell is measured, a measurement window needs to be set to measure the timing of the SSB. That is, SSB measurement timing configurations (SSB Measurement Timing Configurations, SMTC) need to be set to avoid unnecessary measurement and reduce the measurement energy loss of the measurement. A period of the SMTC window may be set to be the same as that of the SSB, such as 5/10/20/40/80/160 milliseconds (ms), and the measurement time interval may be set to 1/2/3/4/5ms or the like, which is related to the quantity of transmitted SSBs. The UE measures the SSB according to SMTC configuration information, and then reports the measurement result to a gNB or performs cell selection.

### 5. Multi-transmission and reception point (Transmission and Reception Point, TRP).

In a multi-TRP scenario, when a plurality of TRPs belong to different cells, different TRPs have different timing information. For example, paths between different TRPs and UEs are different, resulting in different transmission times between different TRPs and UEs and a difference in the time when the data of the TRPs arrives at the UEs.

It is to be noted that in the embodiments of the present application,
the mentioned beam information may also be referred to as: spatial relation (spatial relation) information, spatial domain transmission filter (spatial domain transmission filter) information, spatial filter (spatial filter) information, transmission configuration indicator (Transmission Configuration Indicator, TCI) state information, quasi co-location (Quasi co-location, QCL) information or a QCL parameter, or the like. Downlink beam information may usually be represented by using TCI state information or QCL information. Uplink beam information may usually be represented by using spatial relation information.

The mentioned antenna panel may also be referred to as: an antenna group, an antenna port group, an antenna set, an antenna port set, a beam set, a beam sub-set, an antenna array, an antenna port array, an antenna sub-array, an antenna port sub-array, a logic entity, an entity, an antenna entity, or the like.

An identifier of the panel (Panel) may be: an antenna panel identifier, a reference signal resource identifier, a reference signal resource set identifier, a TCI state identifier, a QCL information identifier, a spatial relation identifier, or the like.

The mentioned objects may be: cells, physical cells, or TRPs.

The mentioned service object of the terminal may be referred to as the local object of the terminal, the current object of the terminal, the current service object of the terminal, the primary object of the terminal, or the like. An example in which the objects are cells is used. The service cell of the terminal may also be referred to as the local cell of the terminal, the current cell of the terminal, the current service cell of the terminal, the primary cell of the terminal, or the like.

The mentioned objects other than the service object of the terminal may also be referred to as adjacent objects of the terminal, non-local objects of the terminal, non-current objects of the terminal, and non-current service objects of the terminal, secondary objects of the terminal, or the like. An example in which the objects are TRPs is used. The TRPs other than the service TRP of the terminal may also be referred to as adjacent TRPs of the terminal, non-service TRPs of the terminal, non-local TRPs of the terminal, non-current TRPs of the terminal, non-current service TRPs of the terminal, secondary TRPs of the terminal, or the like.

Identifier may also be referred to as index (Index) or the like.

In the embodiments of the present application, one object may correspond to at least one piece of timing information. The timing information corresponding to the object may be understood as: timing information obtained by measuring a reference signal of the object.

During implementation, the terminal may use at least one of beams and antenna panels to measure an object, so that the amount of timing information corresponding to one object may be related to at least one of the following: the quantity R of beams used by the terminal to measure the object, the quantity W of antenna panels used by the terminal to measure the object, where both R and W are positive integers. Optionally, the amount of timing information corresponding to one object is less than or equal to a target value, and the target value is equal to a product of R and W.

For example, it is assumed that the terminal uses a beam 1 to measure an object 1 through an antenna panel 1 to obtain timing information a; uses a beam 2 to measure the object 1 through the antenna panel 1 to obtain timing information b; uses a beam 3 to measure the object 1 through an antenna panel 2 to obtain timing information c; and uses a beam 4 to measure the object 1 through the antenna panel 2 to obtain the timing information d. In this case, the amount of timing information corresponding to the object 1 is equal to the target value, which are respectively the timing information a, the timing information b, the timing information c, and the timing information d.

It is assumed that the terminal uses the beam 1 to measure the object 1 through the antenna panel 1 to obtain the timing information a; and uses the beam 3 to measure the object 1 through the antenna panel 2 to obtain the timing information c. In this case, the amount of timing information corresponding to the object 1 is less than the target value, which are respectively the timing information a and the timing information c.

In addition, in the embodiments of the present application, one beam may correspond to at least one piece of timing information. The timing information corresponding to the beam may be understood as: the timing information obtained through measurement by using the beam. For example, if timing information 1 and timing information 2 are obtained through measurement by using a first beam, the timing information corresponding to the first beam includes the timing information 1 and the timing information 2.

One antenna panel may correspond to at least one piece of timing information. The timing information corresponding to the antenna panel may be understood as: timing information obtained through measurement by using the antenna panel (which may alternatively be understood as a beam on the antenna panel). For example, if timing information 3 and timing information 4 are obtained through measurement by using a first antenna panel, the timing information corresponding to the first antenna panel includes the timing information 3 and the timing information 4.

FIG. 2 is a flowchart of an information reporting method according to an embodiment of the present application. The information reporting method in this embodiment of the present application may be performed by a terminal.

As shown in FIG. 2, the information reporting method may include the following steps:
Step 201: Report target information to a network-side device, where the target information includes first information, and the first information corresponds to M pieces of timing information of P objects.

The objects are cells, physical cells, or transmission and reception points TRP, M is a positive integer, and P is a positive integer less than or equal to M.

During specific implementation, the first information being corresponding to M pieces of timing information of P objects may be understood as that: the first information includes the M pieces of timing information of the P objects, or the first information is generated based on the M pieces of timing information of the P objects. In a case that the first information is generated based on the M pieces of timing information of the P objects, specific content included in the first information is determined based on the M pieces of timing information of the P objects.

In this embodiment of the present application, for each of the P objects, the M pieces of timing information include at least one piece of timing information corresponding to the object. Optionally, the M pieces of timing information of the P objects meet any one of the following:
each of the P objects corresponds to one piece of timing information in a case that P is equal to M; or
at least one of the P objects corresponds to at least two pieces of timing information in a case that P is less than M, where the at least two pieces of timing information are measured by using at least one of the following: at least two beams or at least two antenna panels.

A detailed description is as follows:
In a case that P is equal to M, for each of the P objects, the M pieces of timing information include only one piece of timing information corresponding to the object.
In a case that P is less than M, there may be at least two pieces of timing information in the M pieces of timing information corresponding to the same object in the P objects.

However, it should be noted that, for each of the P objects, the timing information corresponding to the object included in the M pieces of timing information may be all or part of timing information corresponding to the object. In other words, in a case that the terminal determines to report the timing information corresponding to the P objects, the terminal may choose to report all the timing information corresponding to each of the P objects, or report part of the timing information corresponding to each of the P objects.

For example, it is assumed that the amount of timing information corresponding to an object 1 includes timing information a, timing information b, timing information c, and timing information d. If the terminal determines to report the timing information corresponding to the object 1, in an optional implementation, the terminal may report all the timing information corresponding to the object 1, that is, report the timing information a, the timing information b, the timing information c, and the timing information d, and the optional implementation may correspond to the foregoing case in which P is less than M; and in another optional implementation, the terminal may report only part of the timing information corresponding to the object 1, for example, report one of the timing information a, the timing information b, the timing information c, and the timing information d, and the optional implementation may correspond to the foregoing case in which P is equal to M.

In this embodiment of the present application, optionally, the timing information corresponding to any object may be, but not limited to, expressed as any one of the following:
a duration occupied for transmitting information from a transmitting end to a receiving end;
a target time domain resource of the information transmitted by the transmitting end and received by the receiving end;
a serial number of the target time domain resource of the information transmitted by the transmitting end and received by the receiving end;
a boundary at which the target time domain resource of the information transmitted by the transmitting end and received by the receiving end is located; or
a TA of the object suggested by the terminal,
where the transmitting end is one of the object and the terminal, and the receiving end is the other of the object and the terminal; the occupied duration may be represented by using time units such as second, millisecond, and microsecond, or may be represented by using at least one of the quantity of frames, the quantity of time slots, the quantity of symbols, the quantity of sample points, or the like; and the target time domain resource may be represented by using at least one of frames, time slots, symbols, sample points, or the like.

In the information reporting method of this embodiment of the present application, a terminal reports target information to a network-side device, where the target information includes first information, and the first information corresponds to M pieces of timing information of P objects, where the objects are cells, physical cells, or transmission and reception points TRP, M is a positive integer, and P is a positive integer less than or equal to M. In this way, when receiving the target information, the network-side device can accurately acquire a difference between the timing information of the P objects, and then transmission of the terminal can be scheduled according to the difference between the timing information of the P objects, to avoid measurement or data interference between the objects, thereby improving the system performance.

In this embodiment of the present application, the terminal may report the target information under an instruction of the network-side device, or may actively report the target information conditionally. Details may be determined according to actual conditions, and this is not limited in this embodiment of the present application.

The following describes the scenario in which the terminal conditionally reports the target information:
In this scenario, optionally, the reporting target information to a network-side device includes:
reporting the target information to the network-side device in a case that a first condition is met, where
the first condition being met may include, but not limited to, at least one of the following:
at least two pieces of TRP identifier information are configured on the network-side device;
at least two cells or physical cells are configured or activated on the network-side device;
a difference between the timing information of at least two objects is greater than or equal to a first value;
carrying timing information of objects in a layer 1 measurement report is configured or triggered on the network-side device; or
an uplink resource used for reporting the timing information of the objects is configured on the network-side device.

A detailed description is as follows:
Optionally, in a case that the first condition being met includes that at least two pieces of TRP identifier information are configured on the network-side device, the first condition being met may further include any one of the following:
the at least two pieces of TRP identifier information correspond to at least two cell identifiers (cell index); or
the at least two pieces of TRP identifier information correspond to at least two physical cell identifiers (Physical Cell Identifier, PCI).

During specific implementation, the correspondence between the at least two pieces of TRP identifier information and the at least two cell identifiers (or the at least two PCIs) may be: a one-to-one correspondence; or a many-to-one correspondence. Each of the at least two pieces of TRP identifier information may correspond to a different cell identifier (or PCI), or there may be two or more pieces of TRP identifier information in the at least two pieces of TRP identifier information that may correspond to the same cell identifier (or PCI).

Optionally, in a case that the first condition being met includes that a difference between the timing information of at least two objects is greater than or equal to a first value, whether the difference between the timing information of the at least two objects is greater than or equal to the first value may be determined based on results of measuring reference signals of the at least two objects by the terminal, where
the reference signals of the at least two objects are measured by using at least one of the following: at least two antenna panels or at least two beams.

During specific implementation, the terminal may determine whether the difference between the timing information of the at least two objects is greater than or equal to the first value according to the results of measuring the reference signals of the at least two objects. In a case that the difference between the timing information of the at least two objects is greater than or equal to the first value, the terminal may report the target information to the network-side device. The first value may be greater than or equal to 0.

The correspondence between the reference signals of the at least two objects and the at least two antenna panels (or the at least two beams) may be: a one-to-one correspondence; or a one-to-many correspondence. The reference signals of the at least two objects may include reference signals measured by using only one antenna panel (or beam), and may alternatively include reference signals measured by using two or more antenna panels (or beams).

In a case that the first condition being met includes carrying timing information of objects in a layer 1 measurement report is configured or triggered on the network-side device; or the layer 1 (Layer 1, L1) measurement report may be an L1-RSRP report or L1-SINR report, but is not limited thereto.

In this embodiment of the present application, it can be learned from the foregoing content that the content included in the first information may be directly the M pieces of timing information of the P objects, or may be information determined based on the M pieces of timing information of the P objects. A detailed description is as follows:

Optionally, the first information may include any one of the following:
the M pieces of timing information;
absolute values of the M pieces of timing information;
M-H offset values (or referred to as relative values); or
M-H offset values and first reference timing information, where
the M-H offset values include an offset value of each of M-H pieces of timing information relative to second reference timing information, the M-H pieces of timing information include timing information in the M pieces of timing information other than the first reference timing information, and the second reference timing information is determined based on the first reference timing information; and the first reference timing information is H pieces of timing information of a preset object, the preset object is configured by the network-side device, specified in a protocol, or determined by the terminal, and H is a positive integer.

A detailed description is as follows:

In a case that the preset object is configured by the network-side device, specified in a protocol, or determined by the terminal, the first information may include the M-H offset values and the first reference timing information; and in a case that the preset object is configured by the network-side device or specified in a protocol, the first information may not carry the first reference timing information, but only carry the M-H offset values, thereby saving signaling overheads.

During specific implementation, the preset object may be a service object of the terminal, but is not limited thereto.

The second reference timing information may be any one or more of the H pieces of timing information, or may be calculated based on the H pieces of timing information. For example, the second reference timing information may be a weighted average value, or an arithmetic average value of part or all of the H pieces of timing information. Details may be determined according to actual conditions, and this is not limited in this embodiment of the present application.

Optionally, in a case that H is greater than 1, the terminal may alternatively indicate the second reference timing information in an explicit or implicit manner. For example: in a case that the first information includes the first reference timing information, and the second reference timing information is any one of the H pieces of timing information, the timing information arranged first or last among the H pieces of timing information may be set as the second reference timing information.

For ease of understanding, examples are described as follows:

It is assumed that the P objects include an object 1 and an object 2, the M pieces of timing information include: timing information a, timing information b, timing information c, and timing information d corresponding to the object 1, and timing information e, timing information f, timing information g, and timing information h corresponding to the object 2.

In addition, it is assumed that the preset object is the object 1, and the second reference timing information is the timing information a. The offset value of the timing information e relative to the timing information a is recorded as offset1, the offset value of the timing information f relative to the timing information a is recorded as offset2, the offset value of the timing information g relative to the timing information a is recorded as offsets, and the offset value of the timing information h relative to the timing information a is recorded as offsets

In this case, the first information may include at least: offset1, offset2, offsets, and offset4. Further, the first information may further include: the timing information a, the timing information b, the timing information c, and the timing information d.

Optionally, the first information may be represented by using a quantized value.

During specific implementation, the unit of the quantized value may be at least one of the quantity of frames, the quantity of time slots, the quantity of symbols, the quantity of sample points, second, millisecond, microsecond, or the like.

A bit length of the quantized value may be specified in a protocol. An example in which the first information includes the foregoing offset1, offset2, offsets, and offset4 is used. It is assumed that offset1 and offsets are one symbol, and offset2 and offset4 are two symbols, then the bit length of the quantized value may be two bits (bit), For example, it is assumed that 01 may represent one symbol, and 10 represents two symbols, then the quantized value of offset1 and offsets may be 01, and the quantized value of offset2 and offset4 may be 10.

Further, in a case that the first information includes the M-H offset values, the first information includes:
M-H quantized values corresponding to the M-H offset values, where
a symbol of a first quantized value is used for representing a relationship between the timing information corresponding to the first quantized value and the second reference timing information, and the first quantized value is any one of the M-H quantized values.

In this optional implementation, the quantized value may have a symbol, and the symbol of the quantized value may be used for representing a relationship between the timing information corresponding to the quantized value and the second reference timing information.

During specific implementation, the relationship between the timing information corresponding to the quantized value and the second reference timing information may include:
the timing information corresponding to the quantized value is before the second reference timing information;
the timing information corresponding to the quantized value is after the second reference timing information; and
the timing information corresponding to the quantized value is equal to the second reference timing information.

Optionally, in a case that a first quantized value is greater than 0, the timing information corresponding to the first quantized value is before the second reference timing information, and in a case that the first quantized value is less than 0, the timing information corresponding to the first quantized value is after the second reference timing information; or in a case that the first quantized value is greater than 0, the timing information corresponding to the first quantized value is after the second reference timing information, and in a case that the first quantized value is less than 0, the timing information corresponding to the first quantized value is before the second reference timing information. Details may be determined according to actual conditions, and this is not limited in this embodiment of the present application. In addition, in a case that the first quantized value is equal to 0, the timing information corresponding to the first quantized value is equal to the second reference timing information.

For ease of understanding, a description is made by using an example in which the quantized value of offset1 and offsets is 01, and the quantized value of offset2 and offset4 is 10 as follows:

It is assumed that both the timing information e and the timing information f are before the timing information a, and both the timing information g and the timing information h are after the timing information a.

In addition, it is assumed that in a case that the first quantized value is greater than 0, the timing information corresponding to the first quantized value is before the second reference timing information; and in a case that the first quantized value is less than 0, the timing information corresponding to the first quantized value is after the second reference timing information.

In this case, the quantized value corresponding to offset1 (the offset value of the timing information e relative to the timing information a) is +01, the quantized value corresponding to offset2 (the offset value of the timing information f relative to timing information a) is +10, the quantized value corresponding to offsets (the offset value of the timing information g relative to the timing information a) is -01, and the quantized value corresponding to offset4 (the offset value of the timing information h relative to the timing information a) is -10.

In this embodiment of the present application, in a case that there are target objects corresponding to at least two pieces of timing information among the P objects, for each target object, in the first reporting manner, the terminal may report two or more pieces of timing information corresponding to the target object; and in the second reporting manner, the terminal may report only one piece of object information corresponding to the target object. The reporting manner to be specifically used may be determined according to actual conditions, and this is not limited in this embodiment of the present application.

In some implementations, optionally, in a case that the P objects include a target object corresponding to L pieces of timing information, and L is an integer greater than 1, the M pieces of timing information include J pieces of timing information corresponding to the target object, a value of J is determined based on a capability of the terminal, and J is a positive integer less than or equal to L.

In other words, whether to use the first reporting manner or the second reporting manner may be determined based on the capability of the terminal.

Optionally, the value of J meets any one of the following:
J is greater than 1 and less than or equal to L in a case that the terminal supports a plurality of active antenna panels or beam transmissions, and supports at least two timing information processing capabilities or at least two TAs; or
J is equal to 1 in a case that the terminal supports only a single active antenna panel, a single active beam transmission, a single timing information processing capability, or a single TA.

In other words, in a case that the terminal supports a plurality of active antenna panels or beam transmissions, and supports at least two timing information processing capabilities or at least two TAs, the first reporting manner may be used. That is, for each target object, two or more pieces of timing information may be reported.

In a case that the terminal only supports a single active antenna panel, a single active beam transmission, a single timing information processing capability, or a single TA, the second reporting manner may be used. That is, for each target object, only one piece of timing information is reported.

In this embodiment of the present application, the network-side device may configure timing information of which objects to be reported by the terminal, or the terminal may determine, according to the measurement results, to report timing information of which objects. In other words, the timing information of which objects to be reported by the terminal may be configured by the network-side device or determined by the terminal.

For ease of description, all objects configured by the network-side device or determined by the terminal are recorded as K objects below, where K is an integer greater than or equal to P.

Optionally, the P objects may include some or all of K objects, where
the K objects are configured by the network-side device or determined by the terminal, and K is an integer greater than or equal to P.

In other words, the terminal may report at least one piece of timing information corresponding to each of all objects configured by the network-side device or determined by the terminal, or may report only at least one piece of timing information corresponding to each of some of all objects configured by the network-side device or determined by the terminal.

Further, in a case that the P objects include some of the K objects, any one of the P objects meets any one of the following:
an absolute value of the timing information is greater than or equal to a second value; or
an offset value of the timing information relative to second reference timing information is greater than or equal to a third value, where
the second reference timing information is determined based on first reference timing information, the first reference timing information is H pieces of timing information of a preset object, the preset object is configured by the network-side device, specified in a protocol, or determined by the terminal, and H is a positive integer.

It should be noted that, for the preset object, the first reference object, and the second reference object in this optional implementation, reference may be made to the foregoing description, and details are not described herein again.

In a case that there is an object corresponding to at least two pieces of timing information among the P objects, the foregoing timing information of which the absolute value is greater than or equal to the second value (or the foregoing timing information of which the offset value relative to the second reference timing information is greater than or equal to the third value) may be one piece of timing information of the object. In this case, for any one of the K objects, provided that there is one piece of timing information of which the absolute value is greater than or equal to the second value (or there is one piece of timing information of which the offset value relative to the second reference timing information is greater than or equal to the third value) in the timing information corresponding to the object, the object may belong to the P objects. Further, the terminal may report all of the timing information of which the absolute value is greater than or equal to the second value (or the timing information of which the offset value relative to the second reference timing information is greater than or equal to the third value) of the object. In this case, it may be understood that each of the M pieces of timing information meets any one of the following: the absolute value is greater than or equal to the second value; or the offset value relative to the second reference timing information is greater than or equal to the third value.

The foregoing timing information of which the absolute value is greater than or equal to the second value (or the foregoing timing information of which the offset value relative to the second reference timing information is greater than or equal to the third value) may alternatively be all timing information of the object. In this case, for any one of the K objects, provided that there is one piece of timing information of which the absolute value is less than the second value (or there is one piece of timing information of which the offset value relative to the second reference timing information is less than the third value) among the timing information corresponding to the object, the object does not belong to the P objects.

During specific implementation, the second value may be greater than or equal to 0, the third value may be greater than or equal to 0, and the second value may be equal to or not equal to the third value.

In this embodiment of the present application, optionally, the target information may further include identifier information of at least one of the objects, beams, or antenna panels corresponding to the M pieces of timing information. In this way, after receiving the target information, the network-side device can accurately learn the correspondence between the M pieces of timing information and at least one of the objects, the beams, or the antenna panels, and then can accurately perform scheduling constraints and improve the system performance.

In this embodiment of the present application, optionally, the target information is carried by any one of the following: a layer 1 measurement report or a media access control (Media Access Control, MAC) control element (Control Element, CE).

The following respectively describes Scenario 1 in which the target information is carried in the layer 1 measurement report and Scenario 2 in which the target information is carried in the MAC CE:
Scenario 1: The target information is carried in the layer 1 measurement report.

In Scenario 1, the format of the layer 1 measurement report carrying the target information may be: N SSBRIs/CRIs + N L1-RSRPs/L1-SINRs + the target information.

In Scenario 1, optionally, in a case that the layer 1 measurement report includes a reference signal resource indicator, the reference signal resource indicator may correspond to a reference signal resource of at least one first object, and the first object is any object other than a service object of the terminal.

In Scenario 1, the identifier information of at least one of the objects, the beams, or the antenna panels corresponding to the M pieces of timing information may be explicitly or implicitly reported through the layer 1 measurement report.

Optionally, the layer 1 measurement report meets at least one of the following:
a) the layer 1 measurement report further includes the identifier information of at least one of the objects, the beams, or the antenna panels corresponding to the M pieces of timing information;
b) the first information is placed in the layer 1 measurement report according to a first rule, where the first rule is used for determining at least one of the objects, the beams, or the antenna panels corresponding to the M pieces of timing information; or
c) in a case that the layer 1 measurement report includes a reference signal resource indicator, a correspondence exists between the M pieces of timing information and the reference signal resource indicator.

In a case that the layer 1 measurement report meets a), the layer 1 measurement report explicitly reports the identifier information of at least one of the objects, the beams, or the antenna panels corresponding to the M pieces of timing information.

In a case that the layer 1 measurement report meets b) and c), the layer 1 measurement report implicitly reports the identifier information of at least one of the objects, the beams, or the antenna panels corresponding to the M pieces of timing information. In this way, compared with the manner of explicit reporting, signaling overheads can be saved.

A detailed description is as follows:
In b), the terminal places the first information by using the first rule corresponding to at least one of the objects, the beams, or the antenna panels corresponding to the M pieces of timing information, so that the network-side device may determine at least one of the objects, the beams, or the antenna panels corresponding to the M pieces of timing information according to a placement position of the first information. During specific implementation, the first rule may be specified in a protocol, or pre-agreed by the network-side device or the terminal. Details may be determined according to actual conditions, and this is not limited in this embodiment of the present application.
In c), a correspondence exists between the M pieces of timing information and the reference signal resource indicator, so that the network-side device may learn, based on at least one of the objects, the beams, or the antenna panels to which the reference signal resource belongs corresponding to the reference signal resource indicator corresponding to each piece of timing information, at least one of the objects, the beams, or the antenna panels corresponding to the M pieces of timing information.

Scenario 2: The target information is carried in the MAC CE.

Optionally, the MAC CE meets any one of the following:
1) the MAC CE is a MAC CE in a first format, and the MAC CE in the first format carries the target information through a first field; or
2) the MAC CE is a MAC CE in a second format, and the MAC CE in the second format is configured to carry the target information.

In a case that the MAC CE meets 1), the MAC CE may carry other information through other fields in addition to carrying the target information through the first field. The first field may be understood as a field newly added in the MAC CE for carrying other signaling messages and dedicated to carrying the target information.

In a case that the MAC CE meets 2), the MAC CE may be understood as: a newly added MAC CE dedicated to carrying the target information.

Optionally, the MAC CE may be any one of the following:
a timing advance command (Timing Advance Command) MAC CE;
an absolute timing advance command (Absolute Timing Advance Command) MAC CE;
a power headroom report (Power Headroom Report, PHR) MAC CE; or
a secondary cell (Secondary Cell, SCell) activation (Activation) or deactivation (Deactivation) MAC CE.

Optionally, the MAC CE may be transmitted by using a grant configured on the network-side device, such as a configured grant or a dynamic grant.

Further, the grant configured on the network-side device may be a dedicated grant for the MAC CE, or may be a reused recently available grant. Details may be determined according to actual conditions, and this is not limited in this embodiment of the present application.

In this embodiment of the present application, after receiving the target information, the network-side device may determine the TA of at least one of the K objects according to the target information, or determine a transmission manner of a channel or an RS according to the target information. A detailed description is as follows:

### Implementation 1

Optionally, after the reporting target information to a network-side device, the method further includes:
receiving Q TAs transmitted by the network-side device; and
determining the TA of each of K objects according to the Q TAs and/or at least one of the M pieces of timing information, where
the K objects are configured by the network-side device or determined by the terminal, K is a positive integer, and Q is a positive integer less than or equal to K.

Optionally, the Q TAs meet any one of the following:
i) the Q TAs include only the TA of a preset object, where the preset object is configured by the network-side device, specified in a protocol, or determined by the terminal;
ii) the Q TAs include the TA of each of the K objects; or
iii) the Q TAs include only the TAs of the objects corresponding to the M pieces of timing information.

In a case that the Q TAs meet i), the network-side device determines only the TA of the preset object, and the TAs of obj ects in the K objects other than the preset object may be determined by differences (or relative values or offset values) between the timing information thereof and the timing information of the preset object. During specific implementation, the preset object may be a service object of the terminal, but is not limited thereto.

In a case that the Q TAs meet ii), the network-side device determines the TA of each of the K objects, then the terminal may directly determine the TA of each of the K objects without additional calculation processing after receiving the Q TAs, thereby reducing the operating load of the terminal.

In a case that the Q TAs meet iii), the network-side device determines only the TAs of the objects corresponding to the M pieces of timing information, and the TAs of objects in the K objects other than the objects corresponding to the M pieces of timing information may be determined by the differences (or relative values or offset values) between the timing information thereof and the timing information of the preset object.

It should be noted that, in a case that an object corresponds to two or more pieces of timing information, the TA of the object may be determined based on any piece of the timing information corresponding to the object, or may be determined based on an average value, for example, a weighted average value or an arithmetic average value, of all timing information corresponding to the object. Details may be determined according to actual conditions, and this is not limited in this embodiment of the present application.

For ease of understanding, examples are described as follows:
It is assumed that the K objects include TRP0 and TRP1, TRP0 corresponds to timing information 0, TRP1 corresponds to timing information 1, the timing information 0 is before the timing information 1, and the timing information 0 and the timing information 1 are separated by 2 slots (slot).

In addition, it is assumed that the network-side device determines that the TA of TRP0 is 6 slots, but does not determine the TA of TRP1.

In this case, the terminal may determine that the TA of TRP1 is 8 slots according to the TA of TRP0 transmitted by the network-side device and the relationship between the timing information 0 and the timing information 1.

In Implementation 1, after determining the TA of each of the K objects, the terminal may maintain consistency of the uplink of the K objects according to the TA of each of the K objects. In this way, the network-side device (or the object) may receive information transmitted by each terminal at the same time point, thereby improving the efficiency of information reception, avoiding mutual interference between a plurality of pieces of uplink information, and then improving the system performance.

### Implementation 2

Optionally, after the reporting target information to a network-side device, the method further includes:
determining, according to the target information, whether to perform a transmitting or receiving operation for second information of a second object, where
the second object is a service object of the terminal, and the second information includes at least one of a channel or a reference signal.

During specific implementation, in a case that the second information includes at least one of a downlink channel or a downlink RS, the determining whether to perform a transmitting or receiving operation for second information of a second object may be specifically expressed as: determining whether to perform a receiving operation for the second information of the second object.

In a case that the second information includes at least one of an uplink channel or an uplink RS, the determining whether to perform a transmitting or receiving operation for second information of a second object may be specifically expressed as: determining whether to transmit the second information to the second object.

It should be noted that transmitting or receiving of the second information of the second object may be scheduled by the network-side device. That is, the network-side device decides: whether the network-side device transmits at least one of the downlink channel or the downlink RS of the second object; and/or whether to allow the terminal to transmit at least one of the uplink channel or the uplink RS of the second object.

Optionally, the determining, according to the target information, whether to perform a transmitting or receiving operation for second information of a second object includes any one of the following:
stopping performing the transmitting or receiving operation for the second information of the second object within a target time period; or
performing the transmitting or receiving operation for the second information of the second object within the target time period in a case that a second condition is met, where
the target time period meets at least one of the following: a first start time of the target time period is before a second start time of a transmission and receiving time of third information of a first object; or a first end time of the target time period is after a second end time of the transmission and receiving time of the third information of the first object; the first object is any object other than the second object; and the third information includes at least one of a channel or a reference signal, or is a reference signal used for measuring the timing information.

A detailed description is as follows:
Case 1: The determining, according to the target information, whether to perform a transmitting or receiving operation for second information of a second object is specifically expressed as: stopping performing the transmitting or receiving operation for the second information of the second object within a target time period.

In Case 1, provided that it is within the target time period, the terminal will stop the transmitting or receiving operation for the second information of the second object, regardless of whether the second condition is met or not.

In other words, in Case 1, the terminal stops performing the transmitting or receiving operation for the second information of the second object within T1 before the start time of the transmission and receiving time of the third information of the first object, the transmission and receiving time of the third information of the first object, and T2 after the end time of the transmission and receiving time of the third information of the first object.

Case 2: The determining, according to the target information, whether to perform a transmitting or receiving operation for second information of a second object is specifically expressed as: performing the transmitting or receiving operation for the second information of the second object within the target time period in a case that a second condition is met.

In Case 2, the terminal will further determine, within the target time period, whether the second condition is met, and if the second condition is met, the terminal may perform the transmitting or receiving operation for the second information of the second object; otherwise, the terminal may perform the transmitting or receiving operation for the second information of the second object.

In other words, in Case 2, in a case that the second condition is met, the terminal may perform the transmitting or receiving operation for the second information of the second object within T1 before the start time of the transmission and receiving time of the third information of the first object, the transmission and receiving time of the third information of the first object, and T2 after the end time of the transmission and receiving time of the third information of the first object.

T1 is a time interval between the first start time and the second start time, and T2 is a time interval between the first end time and the second end time. T1 and T2 may be greater than or equal to 0. Details may be set according to actual conditions, and this is not limited in this embodiment of the present application.

Optionally, T1 and T2 are determined based on the timing information of the first object and the second object.

During specific implementation, in a case that the amount of the timing information corresponding to the first object (or the second object) is greater than 1, T1 and T2 are determined based on target timing information of the first object and the second object. Optionally, both T1 and T2 may be greater than or equal to an absolute value of a difference between the target timing information of the first object and the second object.

The target timing information of the first object (or the second object) may be any piece of timing information of the first object (or the second object), or the target timing information of the first object (or the second object) is equal to a target value. The target value is calculated based on the timing information of the first object (or the second object). For example, the target value may be the average value or maximum value of all timing information of first object (or the second object), but is not limited thereto.

Optionally, the second condition meets any one of the following:
the terminal performs a transmitting or receiving operation for at least one of the third information of the first object or the second information of the second object in a frequency band of a frequency range 1;
the third information of the first object and the second information of the second object meet a quasi co-location (Quasi Co-Location, QCL) relation, or have the same spatial relation, or correspond to the same source reference signal; or
the terminal supports simultaneously performing transmitting or receiving operations for the third information of the first object and the second information of the second obj ect.

Further, in a case that the second condition meets that the terminal supports simultaneously performing transmitting or receiving operations for the third information of the first object and the second information of the second object, the second condition being met further includes any one of the following:
the terminal includes at least one antenna panel; or
the second information and the third information are determined by the network-side device according to a group based beam report.

Optionally, the second information is repeatedly transmitted information. Certainly, in other implementations, the second information may not be repeatedly transmitted information.

For ease of understanding, a description is made below by using the foregoing Case 1, TRP0, and TRP1 as an example:
TRP0 corresponds to the timing information 0, TRP1 corresponds to the timing information 1, the timing information 0 is before the timing information 1, and the timing information 0 and the timing information 1 are separated by one symbol.

It is assumed that both a downlink RS0 of TRP0 and a downlink RS1 of TRP1 are transmitted in a symbol X, the downlink RS0 arrives the terminal in the symbol X, and the downlink symbol RS1 may arrive the terminal within the symbol X and a symbol X+1 because of relatively long propagation paths and multipath propagation. In addition, it is assumed that TRP0 is the service TRP of the terminal.

In this case, the network-side device stops transmitting the downlink RS0 of TRP0 within the arrival time symbol X and the symbol X+1 of the downlink RS1 of TRP1.

In other words, for Case 1, the terminal stops a receiving operation for the second information of TRP0 within the transmission time (symbol X) of the third information of TRP1 and one symbol (symbol X+1) after the transmission time thereof. Correspondingly, the network-side device stops a transmitting operation for the second information of TRP0 within the transmission time (symbol X) of the third information of TRP1 and one symbol (symbol X+1) after the transmission time thereof.

FIG. 3 is a flowchart of an information receiving method according to an embodiment of the present application. The information receiving method in this embodiment of the present application is performed by a network-side device.

As shown in FIG. 3, the information receiving method may include the following steps:
Step 301: Receive target information reported by a terminal, where the target information includes first information, and the first information corresponds to M pieces of timing information of P objects.

The objects are cells, physical cells, or transmission and reception points TRP, M is a positive integer, and P is a positive integer less than or equal to M.

In the information reporting method of this embodiment of the present application, a network-side device receives target information reported by a terminal, where the target information includes first information, and the first information corresponds to M pieces of timing information of P objects, where the objects are cells, physical cells, or transmission and reception points TRP, M is a positive integer, and P is a positive integer less than or equal to M. In this way, when receiving the target information, the network-side device can accurately acquire a difference between the timing information of the P objects, and then transmission of the terminal can be scheduled according to the difference between the timing information of the P objects, to avoid measurement or data interference between the objects, thereby improving the system performance.

Optionally, the first information includes any one of the following:
the M pieces of timing information;
absolute values of the M pieces of timing information;
M-H offset values; or
M-H offset values and first reference timing information, where
the M-H offset values include an offset value of each of M-H pieces of timing information relative to second reference timing information, the M-H pieces of timing information include timing information in the M pieces of timing information other than the first reference timing information, and the second reference timing information is determined based on the first reference timing information; and the first reference timing information is H pieces of timing information of a preset object, the preset object is configured by the network-side device, specified in a protocol, or determined by the terminal, and H is a positive integer.

Optionally, the first information is represented by using a quantized value.

Optionally, in a case that the first information includes the M-H offset values, the first information includes:
M-H quantized values corresponding to the M-H offset values, where
a symbol of a first quantized value is used for representing a relationship between the timing information corresponding to the first quantized value and the second reference timing information, and the first quantized value is any one of the M-H quantized values.

Optionally, the M pieces of timing information of the P objects meet any one of the following:
each of the P objects corresponds to one piece of timing information in a case that P is equal to M; or
at least one of the P objects corresponds to at least two pieces of timing information in a case that P is less than M, where the at least two pieces of timing information are measured by using at least one of the following: at least two beams or at least two antenna panels.

Optionally, the P objects include some or all of K objects, where
the K objects are configured by the network-side device or determined by the terminal, and K is an integer greater than or equal to P.

Optionally, in a case that the P objects include some of the K objects, any one of the P objects meets any one of the following:
an absolute value of the timing information is greater than or equal to a second value; or
an offset value of the timing information relative to second reference timing information is greater than or equal to a third value, where
the second reference timing information is determined based on first reference timing information, the first reference timing information is H pieces of timing information of a preset object, the preset object is configured by the network-side device, specified in a protocol, or determined by the terminal, and H is a positive integer.

Optionally, the target information further includes identifier information of at least one of the objects, beams, or antenna panels corresponding to the M pieces of timing information.

Optionally, the target information is carried by any one of the following: a layer 1 measurement report or a media access control MAC control element CE.

Optionally, in a case that the layer 1 measurement report includes a reference signal resource indicator, the reference signal resource indicator corresponds to a reference signal resource of at least one first object, and the first object is any object other than a service object of the terminal.

Optionally, the layer 1 measurement report meets at least one of the following:
the layer 1 measurement report further includes the identifier information of at least one of the objects, the beams, or the antenna panels corresponding to the M pieces of timing information;
the first information is placed in the layer 1 measurement report according to a first rule, where the first rule is used for determining at least one of the objects, the beams, or the antenna panels corresponding to the M pieces of timing information; or
in a case that the layer 1 measurement report includes a reference signal resource indicator, a correspondence exists between the M pieces of timing information and the reference signal resource indicator.

Optionally, the MAC CE meets any one of the following:
the MAC CE is a MAC CE in a first format, and the MAC CE in the first format carries the target information through a first field; or
the MAC CE is a MAC CE in a second format, and the MAC CE in the second format is configured to carry the target information.

Optionally, after the receiving target information reported by a terminal, the method further includes:
transmitting Q TAs to the terminal, Q being a positive integer.

Optionally, the Q TAs meet any one of the following:
the Q TAs include only the TA of a preset object, where the preset object is configured by the network-side device, specified in a protocol, or determined by the terminal;
the Q TAs include the TA of each of K objects, the K objects being configured by the network-side device or determined by the terminal, and K being a positive integer; or
the Q TAs include only the TAs of the objects corresponding to the M pieces of timing information.

Optionally, after the receiving target information reported by a terminal, the method further includes:
controlling a transmitting or receiving operation for second information of a second object according to the target information; where
the second object is a service object of the terminal, and the second information includes at least one of a channel or a reference signal.

Optionally, the controlling a transmitting or receiving operation for second information of a second object according to the target information includes any one of the following:
stopping performing the transmitting or receiving operation for the second information of the second object within a target time period; or
performing the transmitting or receiving operation for the second information of the second object within the target time period in a case that a second condition is met, where
the target time period meets at least one of the following: a first start time of the target time period is before a second start time of a transmission and receiving time of third information of a first object; or a first end time of the target time period is after a second end time of the transmission and receiving time of the third information of the first object; the first object is any object other than the second object; and the third information includes at least one of a channel or a reference signal, or is a reference signal used for measuring the timing information.

Optionally, the second condition meets any one of the following:
the terminal performs a transmitting or receiving operation for at least one of the third information of the first object or the second information of the second object in a frequency band of a frequency range 1;
the third information of the first object and the second information of the second object meet a quasi co-location relation, or have the same spatial relation, or correspond to the same source reference signal; or
the terminal supports simultaneously performing transmitting or receiving operations for the third information of the first object and the second information of the second obj ect.

Optionally, in a case that the second condition meets that the terminal supports simultaneously performing transmitting or receiving operations for the third information of the first object and the second information of the second object, the second condition being met further includes any one of the following:
the terminal includes at least one antenna panel; or
the second information and the third information are determined by the network-side device according to a group based beam report.

Optionally, T1 and T2 are determined based on the timing information of the first object and the second object, where
T1 is a time interval between the first start time and the second start time, and T2 is a time interval between the first end time and the second end time.

Optionally, the second information is repeatedly transmitted information.

It should be noted that, for this embodiment as an embodiment of the network-side device corresponding to the method embodiment of FIG. 2, reference may be made to related descriptions in the method embodiment of FIG. 2, and the same beneficial effects can be achieved. To avoid repetition, details are not described herein again.

It should be noted that the plurality of optional implementations introduced in this embodiment of the present application may be implemented in combination with each other or implemented independently. This is not limited in this embodiment of the present application.

For ease of understanding, examples are described as follows:

This embodiment may include at least one of the following steps:
(1) When a preset condition is met, UE reports timing information to a network.
   a) The preset condition may include any one of the following:
      i. a plurality of pieces of TRP identifier information configured in the network correspond to different cell indexes/PCIs;
      ii. a plurality of pieces of TRP identifier information are configured in the network;
      iii. a plurality of cells/physical cells are configured or activated in the network;
      iv. there is a difference between the timing information of at least two cells/physical cells/TRPs, or the difference is greater than or equal to the preset value (that there is a difference between the timing information of at least two cells/physical cells/TRPs, or the difference is greater than or equal to the preset value is determined based on results of measuring reference signals of the least two cells/physical cells/TRPs by the terminal, where the foregoing measurements may be measurements made by the UE by using different antenna panels panel and/or different beams);
      v. carrying timing information in an L1-RSRP report or L1-SINR report is configured or triggered in the network; or
      vi. an uplink resource used for reporting the timing information is configured in the network.
   b) The reported timing information content may include any one of the following:
      i. the timing information of a plurality of cells/physical cells/TRPs;
      ii. absolute values of the timing information of a plurality of cells/physical cells/TRPs;
      iii. relative values or offset values offset of the timing information of a plurality of cells/physical cells/TRPs; or
      iv. the relative values or offset values offset of the timing information of a plurality of cells/physical cells/TRPs and reference timing information.

For example, N TRPs belong to N cells respectively, and after measurement, the UE determines N pieces of timing information, that is, N timings. With reference to the timing of the local cell/ current cell/service cell/current service cell, the UE calculates the offset values offset1, offset2, ..., offsetN-1 of the remaining N-1 timings relative to the reference timing.

One or more pieces of reference timing information may be set. For example, each TRP has two pieces of timing information measured by panels, which may be both used as reference values.

The timing information may refer to a duration for propagating a signal from a cell/physical cell/TRP to the UE, a serial number of a target time domain resource of the signal received by the LTE and transmitted from the cell/physical cell/TRP to the LTE, a boundary at which the serial number of the target time domain resource of the signal received by the UE and transmitted from the cell/physical cell/TRP to the UE is located, or a suggested TA of the cell/physical cell/TRP. The unit of the timing information may be represented by using the quantity of frames, the quantity of time slots, the quantity of symbols, the quantity of sample points, or the like, or may be represented by using a time unit such as second, millisecond, microsecond, or the like.

The foregoing timing information of the plurality of cells/physical cells/TRPs may specifically be expressed as: all or part of the timing information of the plurality of cells/physical cells/TRPs.

Further constraint: timing information (or referred to as a timing relation) is reported only when the timing information of a cell/physical cell/TRP meets the preset conditions:
the absolute value is greater than or equal to a preset value; and
a timing offset value from a reference timing (reference timing) is greater than or equal to a preset value.

For example: skip reporting when offset is less than delta; and perform reporting only when offset is greater than or equal to delta.

The signaling format of the timing information may meet at least one of the following:
1. the quantity of frames, the quantity of time slots, the quantity of symbols, the quantity of sample points, second, millisecond, microsecond, or the like is used as a unit;
2. a quantized value of each piece of timing information is determined, and a bit length of the quantized value may be specified in a protocol; or
3. a quantized value of the relative value is determined, and a bit length of the quantized value may be specified in a protocol.

For example, there are three TRPs belonging to three cells respectively, the UE measures and determines three timing values, and by using the timing value of the local cell as reference based on the other two timing values, offset1 and offset2 are calculated, which are one symbol and two symbols respectively, then two bits are used, for example, 01 being offset=1 symbol, and 10 being offset=2 symbols.

For example, the relative value may include a positive value and a negative value, where the positive value indicates that the timing information is after the reference value, and the negative value indicates that the timing information is before the reference value; or vice versa.

For example, a relative value of 0 may indicate that the timing information is the same as the reference value.
c) Reporting form:
i. Being reported in an L1-RSRP report or L1-SINR report.
   1. The format is: N SSBRIs/CRIs + N L1-RSRPs/L1-SINRs + M pieces of timing information.
   2. Optionally, the timing information of the cells/physical cells/TRPs to which the SSB resources/CSI-RS resources corresponding to all of the N SSBRIs/CRIs belong is always reported.
      For example, there are four SSBRIs/CRIs in the L1 report, and there are two cells/physical cells/TRPs to which the corresponding SSB resources/CSI-RS resources belong, then the timing information, which may be the foregoing absolute value or relative value, of the two cells/physical cells/TRPs is always reported.
   3. Optionally, in the cells/physical cells/TRPs to which the SSB resources/CSI-RS resources corresponding to the N SSBRIs/CRIs belong, when the timing information of a cell/physical cell/TRP includes timing information that meets the preset conditions, the timing information of the cell/physical cell/TRP is reported. Further, only the timing information that meets the preset conditions may be reported.
   4. Optionally, there is an SSB resource/CSI-RS resource corresponding to at least one adjacent cell/physical cell/TRP among the N SSBRIs/CRIs, and in this case, the timing information of these cells/physical cells/TRPs needs to be always reported as that in 2 or conditionally reported as that in 3.
   5. Optionally, the foregoing timing information of each cell/physical cell/TRP that needs to be reported includes at least one of the following:
      a) Timing information corresponding to at least one piece of beam information, and corresponding beam information.
         For example, when measuring the timing information of a cell/physical cell/TRP, the LTE uses beam1 to obtain timing1 through measurement, and uses beam2 to obtain timing2 through measurement, then timing1 corresponding to beam1 and timing2 corresponding to beam2 may be always reported or conditionally reported, and the corresponding beam identifiers or index information further need to be reported.
      b) Timing information corresponding to at least one piece of panel information, and corresponding panel information.

For example, it is similar to the above. The panel information may be panel id.

It should be noted that the reported timing information of each cell/physical cell/TRP may meet at least one of the following:
A: one object corresponds to one timing;
B: one object corresponds to a plurality of timings, which are respectively measured by using a plurality of panels and/or a plurality of beams;
C: one panel corresponds to one timing; or
D: one beam corresponds to one timing.

The foregoing items can determine whether the report carries at least one of the following: an object ID, a panel ID, or a beam identifier (for which an RS resource index is generally used).

6. Optionally, the cell/physical cell/TRP information and/or panel identifier information and/or beam identifier information corresponding to each piece of timing information is reported.

The reporting manner of the cell/physical cell/TRP information and/or the panel identifier information and/or the beam identifier information corresponding to each piece of timing information may be any one of the following:
a) the cell/physical cell/TRP information such as a cell index, a PCI, or a TRP id (control resource set pool (Control Resource Set Pool, CORESET Pool) Index), and/or the panel identifier information and/or the beam identifier information may be explicitly reported;
b) respective timing information is reported according to a pre-agreed sequence of the cell index, the PCI, and the TRP id and/or the panel identifier information and/or the beam identifier information; or
c) it can be learned in the L1 report based on the cell/physical cell/TRP to which the SSB resource/CSI-RS resource corresponding to the SSBRI/CRI belongs and/or the panel identifier information and/or the beam identifier information corresponding to each piece of timing information.

ii. Being reported in a MAC CE.
1. The MAC CE may include, but not limited to, a newly added fields in any one of the following MAC CEs, which are configured to carry information such as timing information of a cell/physical cell/TRP, a cell index, a PCI, a TRP id, beam information, or panel information.

The MAC CE may be any one of the following:
a) Timing Advance Command MAC CE;
b) Absolute Timing Advance Command MAC CE;
c) PHR MAC CE; or
d) SCell /Deactivation MAC CE.

2. The MAC CE performs transmission by using a grant configured in the network.

The grant configured in the network can meet at least one of the following:
a) the grant configured in the network may be a configured grant, a dynamic grant, or the like; or
b) the grant configured in the network may be a grant dedicated to the MAC CE, or a reused recently available grant.

D) The reported timing information and other messages are determined relying on UE capabilities.
i. For example, if the UE supports a plurality of active panels/a plurality of beam transmissions, and supports a plurality of timing processing capabilities or a plurality of TAs, the timing information corresponding to a plurality of panels/beams may be reported.
ii. For example, if the LTE supports only a single timing processing capability or a single TA, only one piece of timing information can be reported for each cell/physical cell/TRP.

(2) The network may perform at least one of the following operations according to the timing information reported by the UE:
a) Determining a TA.
   i. Only one TA is determined.
      1. The TA corresponds to a preset cell/physical cell/TRP.

Optionally, the preset cell/physical cell/TRP may be the local cell/physical cell/TRP, the current cell/physical cell/TRP, the service cell/physical cell/TRP, the current service cell/physical cell/TRP, the reference cell/physical cell/ TRP.

2. The TAs of the remaining cells/physical cells/TRPs are determined according to the TA and differences between the timing information of the remaining cells/physical cells/TRPs and that of the preset cell/physical cell/TRP.

ii. At least one TA is determined.

The at least one TA corresponds to any one of the following:

All cells/physical cells/TRPs; or

The cells/physical cells/TRPs corresponding to the timing information reported by the UE.
b) Determining a transmission manner of a channel or an RS.
i. Skip transmitting a channel or an RS in the local//current/service/current service/primary cell /physical cell/TRP within the time during which a channel or an RS is transmitted in the adjacent cell/physical cell/TRP and within a duration T1 before this time and/or a duration T2 after this time.
   1. For the case in which there are a plurality of adj acent cells/physical cells/TRPs, the foregoing rule is applied to each cell/physical cell/TRP.
   2. The T1 and T2 are determined according to the timing information of each cell/physical cell/TRP measured by the UE.

For example, two TRPs belong to two cells, and the timing offsets of TRP2 and TRP1 is one symbol, indicating that when a channel or an RS is transmitted in TRP2, to avoid interference from TRP1, no channel or RS is transmitted in TRP1 within the time during which the channel or RS is transmitted in TRP2 and one subsequent symbol.

3. The transmitting means that if it is a downlink channel or RS, the downlink channel or RS is transmitted by the network-side device of the cell/physical cell/TRP and received by the UE, and skipping transmitting means no transmission and/or no reception. If it is an uplink channel or RS, the uplink channel or RS is received by the network-side device of the cell/physical cell/TRP, and transmitted by the LTE, and skipping transmitting means no transmission and/or no reception

4. The channel and RS may include at least one of a downlink channel, a downlink RS, an uplink channel, or an uplink RS.

5. If the channel or RS uses a repeated transmission (repetition) manner, such as physical downlink control channel (Physical Downlink Control Channel, PDCCH) repetition, physical downlink shared channel (Physical Downlink Shared Channel, PDSCH) repetition, physical uplink control channel (Physical Uplink Control Channel, PUCCH) repetition, or physical uplink shared channel (Physical Uplink Shared Channel, PUSCH) repetition.
a) If the channel or RS is transmitted in the local/current/service/current service/primary cell/physical cell/TRP, within the foregoing time, if there are several repeated transmissions of the channel or RS, the several transmissions will be stopped.
b) If the channel or RS is repeatedly transmitted in the local/current/service/current service/primary cell/physical cell/TRP and the adjacent cell/physical cell/TRP, then for several repeated transmissions in the local cell/current cell/service cell/current service cell that will occur within the foregoing time, the several transmissions will be stopped.

ii. Different from i above, a channel or RS may be transmitted in the local/current/service/current service/primary cell/physical cell/TRP in the following cases:
1. the channel or RS is transmitted between at least one of the adjacent cell/physical cell/TRP or the local/current/service/current service/primary cell/physical cell/TRP with the LTE in a frequency band of FR1;
2. the channel or RS of the adjacent cell/physical cell/TRP and that of the local/current/service/current service/primary cell/physical cell/TRP are QCL, for example, the beam information is the same, and the two can be frequency division multiplexed;
3. the channel or RS of the adjacent cell/physical cell/TRP and that of the local/current/service/current service/primary cell/physical cell/TRP can be simultaneously received by the UE.
   a) In this case, the UE may have a single panel or a plurality of panels.
   b) The above simultaneous reception may be a plurality of channels or RSs respectively from different cells/physical cells/TRPs determined by the network-side device according to a group based beam report of the UE.

In this embodiment of the present application, the UE may report the timing information of a plurality of cells/physical cells/TRPs. The triggering condition, information content (timing offset), signaling format, and the like for reporting are further limited; a L1 report or MAC CE and a specific format design are used for reporting; the reported timing information is determined according to UE capabilities; the manner of a TA is determined; and channel transmission constraints are determined according to the timing information reported by the UE. It can be seen that this embodiment of the present application provides a method for UE to report timing information corresponding to a cell/physical cell/TRP, which accelerates a reporting process through L1 and L2 signaling, so that the network quickly and accurately learns a difference between the timing information of each cell/physical cell/TRP, thereby taking the interference to adjacent cells into account during channel transmission scheduling, and improving the system performance.

It should be noted that, the information reporting method provided in this embodiment of the present application may be executed by an information reporting apparatus, or a control module in the information reporting apparatus for performing the information reporting method. In this embodiment of the present application, the information reporting apparatus provided in this embodiment of the present application is described by using an example in which the information reporting apparatus performs the information reporting method.

FIG. 4 is a structural diagram of an information reporting apparatus according to an embodiment of the present application.

As shown in FIG. 4, the information reporting apparatus 400 includes:
a reporting module 401, configured to report target information to a network-side device, where the target information includes first information, and the first information corresponds to M pieces of timing information of P objects, where
the objects are cells, physical cells, or transmission and reception points TRPs, M is a positive integer, and P is a positive integer less than or equal to M.

Optionally, the reporting module 401 is further configured to:
report the target information to the network-side device in a case that a first condition is met, where
the first condition being met includes at least one of the following:
at least two pieces of TRP identifier information are configured on the network-side device;
at least two cells or physical cells are configured or activated on the network-side device;
a difference between the timing information of at least two objects is greater than or equal to a first value;
carrying timing information of objects in a layer 1 measurement report is configured or triggered on the network-side device; or
an uplink resource used for reporting the timing information of the objects is configured on the network-side device.

Optionally, in a case that the first condition being met includes that at least two pieces of TRP identifier information are configured on the network-side device, the first condition being met further includes any one of the following:
the at least two pieces of TRP identifier information correspond to at least two cell identifiers; or
the at least two pieces of TRP identifier information correspond to at least two physical cell identifiers.

Optionally, in a case that the first condition being met includes that a difference between the timing information of at least two objects is greater than or equal to a first value, whether the difference between the timing information of the at least two objects is greater than or equal to the first value is determined based on results of measuring reference signals of the at least two objects by the terminal, where
the reference signals of the at least two objects are measured by using at least one of the following: at least two antenna panels or at least two beams.

Optionally, the first information includes any one of the following:
the M pieces of timing information;
absolute values of the M pieces of timing information;
M-H offset values; or
M-H offset values and first reference timing information, where
the M-H offset values include an offset value of each of M-H pieces of timing information relative to second reference timing information, the M-H pieces of timing information include timing information in the M pieces of timing information other than the first reference timing information, and the second reference timing information is determined based on the first reference timing information; and the first reference timing information is H pieces of timing information of a preset object, the preset object is configured by the network-side device, specified in a protocol, or determined by the terminal, and H is a positive integer.

Optionally, the first information is represented by using a quantized value.

Optionally, in a case that the first information includes the M-H offset values, the first information includes:
M-H quantized values corresponding to the M-H offset values, where
a symbol of a first quantized value is used for representing a relationship between the timing information corresponding to the first quantized value and the second reference timing information, and the first quantized value is any one of the M-H quantized values.

Optionally, the M pieces of timing information of the P objects meet any one of the following:
each of the P objects corresponds to one piece of timing information in a case that P is equal to M; or
at least one of the P objects corresponds to at least two pieces of timing information in a case that P is less than M, where the at least two pieces of timing information are measured by using at least one of the following: at least two beams or at least two antenna panels.

Optionally, in a case that the P objects include a target object corresponding to L pieces of timing information, and L is an integer greater than 1, the M pieces of timing information include J pieces of timing information corresponding to the target object, a value of J is determined based on a capability of the terminal, and J is a positive integer less than or equal to L.

Optionally, the value of J meets any one of the following:
J is greater than 1 and less than or equal to L in a case that the terminal supports a plurality of active antenna panels or beam transmissions, and supports at least two timing information processing capabilities or at least two TAs; or
J is equal to 1 in a case that the terminal supports only a single active antenna panel, a single active beam transmission, a single timing information processing capability, or a single TA.

Optionally, the P objects include some or all of K objects, where
the K objects are configured by the network-side device or determined by the terminal, and K is an integer greater than or equal to P.

Optionally, in a case that the P objects include some of the K objects, any one of the P objects meets any one of the following:
an absolute value of the timing information is greater than or equal to a second value; or
an offset value of the timing information relative to second reference timing information is greater than or equal to a third value, where
the second reference timing information is determined based on first reference timing information, the first reference timing information is H pieces of timing information of a preset object, the preset object is configured by the network-side device, specified in a protocol, or determined by the terminal, and H is a positive integer.

Optionally, the target information further includes identifier information of at least one of the objects, beams, or antenna panels corresponding to the M pieces of timing information.

Optionally, the target information is carried by any one of the following: a layer 1 measurement report or a media access control MAC control element CE.

Optionally, in a case that the layer 1 measurement report includes a reference signal resource indicator, the reference signal resource indicator corresponds to a reference signal resource of at least one first object, and the first object is any object other than a service object of the terminal.

Optionally, the layer 1 measurement report meets at least one of the following:
the layer 1 measurement report further includes the identifier information of at least one of the objects, the beams, or the antenna panels corresponding to the M pieces of timing information;
the first information is placed in the layer 1 measurement report according to a first rule, where the first rule is used for determining at least one of the objects, the beams, or the antenna panels corresponding to the M pieces of timing information; or
in a case that the layer 1 measurement report includes a reference signal resource indicator, a correspondence exists between the M pieces of timing information and the reference signal resource indicator.

Optionally, the MAC CE meets any one of the following:
the MAC CE is a MAC CE in a first format, and the MAC CE in the first format carries the target information through a first field; or
the MAC CE is a MAC CE in a second format, and the MAC CE in the second format is configured to carry the target information.

Optionally, the information reporting apparatus 400 further includes:
a first receiving module, configured to receive Q TAs transmitted by the network-side device; and
a first determining module, configured to determine the TA of each of K objects according to the Q TAs and/or at least one of the M pieces of timing information, where
the K objects are configured by the network-side device or determined by the terminal, K is a positive integer, and Q is a positive integer less than or equal to K.

Optionally, the Q TAs meet any one of the following:
the Q TAs include only the TA of a preset object, where the preset object is configured by the network-side device, specified in a protocol, or determined by the terminal;
the Q TAs include the TA of each of the K objects; or
the Q TAs include only the TAs of the objects corresponding to the M pieces of timing information.

Optionally, the information reporting apparatus 400 further includes:
a second determining module, configured to determine, according to the target information, whether to perform a transmitting or receiving operation for second information of a second object, where
the second object is a service object of the terminal, and the second information includes at least one of a channel or a reference signal.

Optionally, the second determining module is further configured to any one of the following:
stop performing the transmitting or receiving operation for the second information of the second object within a target time period; or
perform the transmitting or receiving operation for the second information of the second object within the target time period in a case that a second condition is met, where
the target time period meets at least one of the following: a first start time of the target time period is before a second start time of a transmission and receiving time of third information of a first object; or a first end time of the target time period is after a second end time of the transmission and receiving time of the third information of the first object; the first object is any object other than the second object; and the third information includes at least one of a channel or a reference signal, or is a reference signal used for measuring the timing information.

Optionally, the second condition meets any one of the following:
the terminal performs a transmitting or receiving operation for at least one of the third information of the first object or the second information of the second object in a frequency band of a frequency range 1;
the third information of the first object and the second information of the second object meet a quasi co-location relation, or have the same spatial relation, or correspond to the same source reference signal; or
the terminal supports simultaneously performing transmitting or receiving operations for the third information of the first object and the second information of the second obj ect.

Optionally, in a case that the second condition meets that the terminal supports simultaneously performing transmitting or receiving operations for the third information of the first object and the second information of the second object, the second condition being met further includes any one of the following:
the terminal includes at least one antenna panel; or
the second information and the third information are determined by the network-side device according to a group based beam report.

Optionally, T1 and T2 are determined based on the timing information of the first object and the second object, where
T1 is a time interval between the first start time and the second start time, and T2 is a time interval between the first end time and the second end time.

Optionally, the second information is repeatedly transmitted information.

The information reporting apparatus in this embodiment of the present application may be an apparatus, or may be a component, an integrated circuit, or a chip in a terminal. The apparatus may be a mobile terminal, or may be a non-mobile terminal. For example, the mobile terminal may include, but not limited to, the types of the terminal 11 listed above, and the non-mobile terminal may be a server, a network attached storage (Network Attached Storage, NAS), a personal computer (personal computer, PC), a television (television, TV), a teller machine, a self-service machine, or the like. This is not specifically limited in this embodiment of the present application.

The information reporting apparatus in this embodiment of the present application may be an apparatus having an operating system. The operating system may be an Android (Android) operating system, an iOS operating system, or another possible operating system, which is not specifically limited in this embodiment of the present application.

The information reporting apparatus 400 provided in this embodiment of the present application can implement various processes implemented in the method embodiment of FIG. 2, and achieve the same technical effects. To avoid repetition, details are not described herein again.

It should be noted that, the information receiving method provided in this embodiment of the present application may be executed by an information receiving apparatus, or a control module in the information receiving apparatus for performing the information receiving method. In this embodiment of the present application, the information receiving apparatus provided in this embodiment of the present application is described by using an example in which the information receiving apparatus performs the information receiving method.

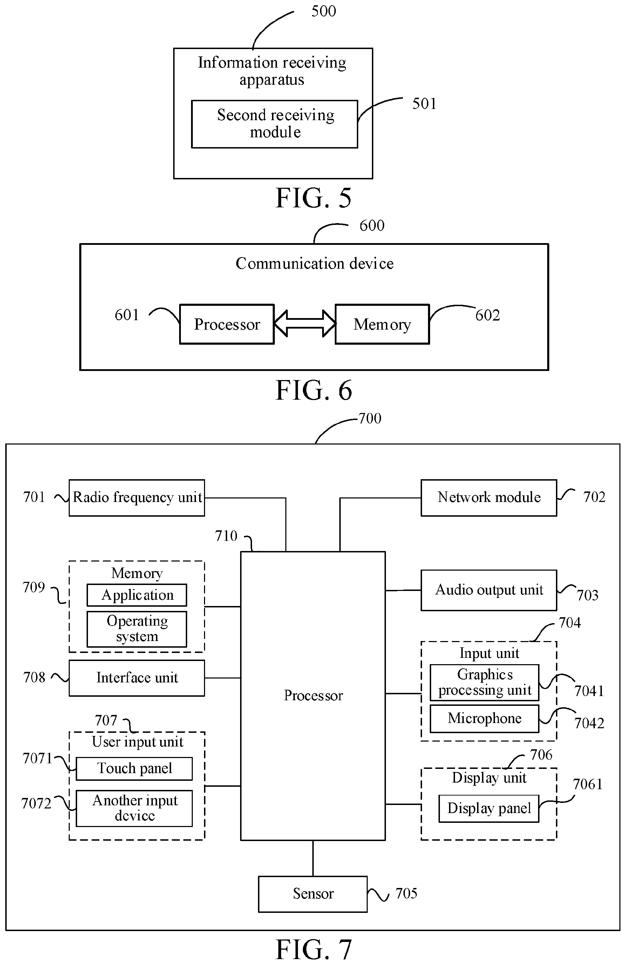

FIG. 5 is a structural diagram of an information receiving apparatus according to an embodiment of the present application.

As shown in FIG. 5, the information receiving apparatus 500 includes:
a second receiving module 501, configured to receive target information reported by a terminal, where the target information includes first information, and the first information corresponds to M pieces of timing information of P objects, where
the objects are cells, physical cells, or transmission and reception points TRPs, M is a positive integer, and P is a positive integer less than or equal to M.

Optionally, the first information includes any one of the following:
the M pieces of timing information;
absolute values of the M pieces of timing information;
M-H offset values; or
M-H offset values and first reference timing information, where
the M-H offset values include an offset value of each of M-H pieces of timing information relative to second reference timing information, the M-H pieces of timing information include timing information in the M pieces of timing information other than the first reference timing information, and the second reference timing information is determined based on the first reference timing information; and the first reference timing information is H pieces of timing information of a preset object, the preset object is configured by the network-side device, specified in a protocol, or determined by the terminal, and H is a positive integer.

Optionally, the first information is represented by using a quantized value.

Optionally, in a case that the first information includes the M-H offset values, the first information includes:
M-H quantized values corresponding to the M-H offset values, where
a symbol of a first quantized value is used for representing a relationship between the timing information corresponding to the first quantized value and the second reference timing information, and the first quantized value is any one of the M-H quantized values.

Optionally, the M pieces of timing information of the P objects meet any one of the following:
each of the P objects corresponds to one piece of timing information in a case that P is equal to M; or
at least one of the P objects corresponds to at least two pieces of timing information in a case that P is less than M, where the at least two pieces of timing information are measured by using at least one of the following: at least two beams or at least two antenna panels.

Optionally, the P objects include some or all of K objects, where
the K objects are configured by the network-side device or determined by the terminal, and K is an integer greater than or equal to P.

Optionally, in a case that the P objects include some of the K objects, any one of the P objects meets any one of the following:
an absolute value of the timing information is greater than or equal to a second value; or
an offset value of the timing information relative to second reference timing information is greater than or equal to a third value, where
the second reference timing information is determined based on first reference timing information, the first reference timing information is H pieces of timing information of a preset object, the preset object is configured by the network-side device, specified in a protocol, or determined by the terminal, and H is a positive integer.

Optionally, the target information further includes identifier information of at least one of the objects, beams, or antenna panels corresponding to the M pieces of timing information.

Optionally, the target information is carried by any one of the following: a layer 1 measurement report or a media access control MAC control element CE.

Optionally, in a case that the layer 1 measurement report includes a reference signal resource indicator, the reference signal resource indicator corresponds to a reference signal resource of at least one first object, and the first object is any object other than a service object of the terminal.

Optionally, the layer 1 measurement report meets at least one of the following:
the layer 1 measurement report further includes the identifier information of at least one of the objects, the beams, or the antenna panels corresponding to the M pieces of timing information;
the first information is placed in the layer 1 measurement report according to a first rule, where the first rule is used for determining at least one of the objects, the beams, or the antenna panels corresponding to the M pieces of timing information; or
in a case that the layer 1 measurement report includes a reference signal resource indicator, a correspondence exists between the M pieces of timing information and the reference signal resource indicator.

Optionally, the MAC CE meets any one of the following:
the MAC CE is a MAC CE in a first format, and the MAC CE in the first format carries the target information through a first field; or
the MAC CE is a MAC CE in a second format, and the MAC CE in the second format is configured to carry the target information.

Optionally, the information receiving apparatus 500 further includes:
a transmission module, configured to transmit Q TAs to the terminal, Q being a positive integer.

Optionally, the Q TAs meet any one of the following:
the Q TAs include only the TA of a preset object, where the preset object is configured by the network-side device, specified in a protocol, or determined by the terminal;
the Q TAs include the TA of each of K objects, the K objects being configured by the network-side device or determined by the terminal, and K being a positive integer; or
the Q TAs include only the TAs of the objects corresponding to the M pieces of timing information.

Optionally, the information receiving apparatus 500 further includes:
a control module, configured to control a transmitting or receiving operation for second information of a second object according to the target information; where
the second object is a service object of the terminal, and the second information includes at least one of a channel or a reference signal.

Optionally, the control module is further configured to any one of the following:
stop performing the transmitting or receiving operation for the second information of the second object within a target time period; or
perform the transmitting or receiving operation for the second information of the second object within the target time period in a case that a second condition is met, where
the target time period meets at least one of the following: a first start time of the target time period is before a second start time of a transmission and receiving time of third information of a first object; or a first end time of the target time period is after a second end time of the transmission and receiving time of the third information of the first object; the first object is any object other than the second object; and the third information includes at least one of a channel or a reference signal, or is a reference signal used for measuring the timing information.

Optionally, the second condition meets any one of the following:
the terminal performs a transmitting or receiving operation for at least one of the third information of the first object or the second information of the second object in a frequency band of a frequency range 1;
the third information of the first object and the second information of the second object meet a quasi co-location relation, or have the same spatial relation, or correspond to the same source reference signal; or
the terminal supports simultaneously performing transmitting or receiving operations for the third information of the first object and the second information of the second obj ect.

Optionally, in a case that the second condition meets that the terminal supports simultaneously performing transmitting or receiving operations for the third information of the first object and the second information of the second object, the second condition being met further includes any one of the following:
the terminal includes at least one antenna panel; or
the second information and the third information are determined by the network-side device according to a group based beam report.

Optionally, T1 and T2 are determined based on the timing information of the first object and the second object, where
T1 is a time interval between the first start time and the second start time, and T2 is a time interval between the first end time and the second end time.

Optionally, the second information is repeatedly transmitted information.

The information receiving apparatus in this embodiment of the present application may be an apparatus, or may be a component, an integrated circuit, or a chip in a network-side device. The network-side device may include, but not limited to, the types of the network-side device 12 listed above, which is not specifically limited in this embodiment of the present application.

The information receiving apparatus 500 provided in this embodiment of the present application can implement various processes implemented in the method embodiment of FIG. 3, and achieve the same technical effects. To avoid repetition, details are not described herein again.

Optionally, as shown in FIG. 6, an embodiment of the present application further provides a communication device 600, including a processor 601, a memory 602, and a program or instructions stored in the memory 602 and runnable on the processor 601. For example, in a case that the communication device 600 is a terminal, when the program or instructions are executed by the processor 601, various processes of the method embodiment of FIG. 2 are implemented, and the same technical effects can be achieved. In a case that the communication device 600 is a network-side device, when the program or instructions are executed by the processor 601, various processes of the method embodiment of FIG. 3 are implemented, and the same technical effects can be achieved. To avoid repetition, details are not described herein again.

FIG. 7 is a schematic diagram of a hardware structure of a terminal for implementing embodiments of the present application.

The terminal 700 includes, but is not limited to, components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include the power supply (such as a battery) for supplying power to the components. The power supply may be logically connected to the processor 710 by using a power management system, thereby implementing functions, such as charging, discharging, and power consumption management, by using the power management system. A terminal structure shown in FIG. 7 does not constitute a limitation to the terminal, and the terminal may include more or fewer components than those shown in the figure, or some components may be combined, or a different component deployment may be used. Details are not described herein again.

It should be understood that in this embodiment of the present application, the input unit 704 may include a graphics processing unit (Graphics Processing Unit, GPU) 7041 and a microphone 7042. The graphics processing unit 7041 processes image data of a static picture or a video obtained by an image capturing apparatus (for example, a camera) in a video capturing mode or an image capturing mode. The display unit 706 may include a display panel 7061. The display panel 7061 may be configured in the form of a liquid crystal display, an organic light-emitting diode, or the like. The input unit 707 may include a touch panel 7071 and another input device 7072. The touch panel 7071 is also referred to as a touch screen. The touch panel 7071 may include a touch detection apparatus and a touch controller. The another input device 7072 may include, but not limited to, a physical keyboard, a functional key (such as a volume control key or a switch key), a track ball, a mouse, and a joystick. Details are not described herein again.

In this embodiment of the present application, the radio frequency unit 701 receives downlink data from a network-side device, then transmits the downlink data to the processor 710 for processing, and transmits uplink data to the network-side device. Generally, the radio frequency circuit 701 includes, but is not limited to, an antenna, at least one amplifier, a transceiver, a coupler, a low noise amplifier, a duplexer, and the like.

The memory 709 is configured to store a software program or instructions and various data. The memory 709 may mainly include a program or instruction storage area and a data storage area. The program or instruction storage area may store an operating system, an application or instructions required by at least one function (for example, a sound playback function and an image display function), and the like. In addition, the memory 709 may include a high-speed random access memory, or may further include a non-volatile memory. The non-volatile memory may be a read-only memory (read-only memory, ROM), a programmable ROM (programmable ROM, PROM), an erasable PROM (erasable PROM, EPROM), an electrically EPROM (electrically EPROM, EEPROM), or a flash memory, such as at least one magnetic disk storage device, a flash memory, or another non-volatile solid-state storage device.

The processor 710 may include one or more processing units. Optionally, the processor 710 may integrate an application processor and a modem. The application processor mainly processes an operating system, a user interface, an application, instructions, and the like. The modem mainly processes wireless communication, which may be, for example, a baseband processor. It may be understood that the foregoing modem may not be integrated into the processor 710.

The radio frequency unit 701 is configured to:
report target information to a network-side device, where the target information includes first information, and the first information corresponds to M pieces of timing information of P objects, where
the objects are cells, physical cells, or transmission and reception points TRPs, M is a positive integer, and P is a positive integer less than or equal to M.

Optionally, the radio frequency unit 701 is further configured to:
report the target information to the network-side device in a case that a first condition is met, where
the first condition being met includes at least one of the following:
at least two pieces of TRP identifier information are configured on the network-side device;
at least two cells or physical cells are configured or activated on the network-side device;
a difference between the timing information of at least two objects is greater than or equal to a first value;
carrying timing information of objects in a layer 1 measurement report is configured or triggered on the network-side device; or
an uplink resource used for reporting the timing information of the objects is configured on the network-side device.

Optionally, in a case that the first condition being met includes that at least two pieces of TRP identifier information are configured on the network-side device, the first condition being met further includes any one of the following:
the at least two pieces of TRP identifier information correspond to at least two cell identifiers; or
the at least two pieces of TRP identifier information correspond to at least two physical cell identifiers.

Optionally, in a case that the first condition being met includes that a difference between the timing information of at least two objects is greater than or equal to a first value, whether the difference between the timing information of the at least two objects is greater than or equal to the first value is determined based on results of measuring reference signals of the at least two objects by the terminal, where
the reference signals of the at least two objects are measured by using at least one of the following: at least two antenna panels or at least two beams.

Optionally, the first information includes any one of the following:
the M pieces of timing information;
absolute values of the M pieces of timing information;
M-H offset values; or
M-H offset values and first reference timing information, where
the M-H offset values include an offset value of each of M-H pieces of timing information relative to second reference timing information, the M-H pieces of timing information include timing information in the M pieces of timing information other than the first reference timing information, and the second reference timing information is determined based on the first reference timing information; and the first reference timing information is H pieces of timing information of a preset object, the preset object is configured by the network-side device, specified in a protocol, or determined by the terminal, and H is a positive integer.

Optionally, the first information is represented by using a quantized value.

Optionally, in a case that the first information includes the M-H offset values, the first information includes:
M-H quantized values corresponding to the M-H offset values, where
a symbol of a first quantized value is used for representing a relationship between the timing information corresponding to the first quantized value and the second reference timing information, and the first quantized value is any one of the M-H quantized values.

Optionally, the M pieces of timing information of the P objects meet any one of the following:
each of the P objects corresponds to one piece of timing information in a case that P is equal to M; or
at least one of the P objects corresponds to at least two pieces of timing information in a case that P is less than M, where the at least two pieces of timing information are measured by using at least one of the following: at least two beams or at least two antenna panels.

Optionally, in a case that the P objects include a target object corresponding to L pieces of timing information, and L is an integer greater than 1, the M pieces of timing information include J pieces of timing information corresponding to the target object, a value of J is determined based on a capability of the terminal, and J is a positive integer less than or equal to L.

Optionally, the value of J meets any one of the following:
J is greater than 1 and less than or equal to L in a case that the terminal supports a plurality of active antenna panels or beam transmissions, and supports at least two timing information processing capabilities or at least two TAs; or
J is equal to 1 in a case that the terminal supports only a single active antenna panel, a single active beam transmission, a single timing information processing capability, or a single TA.

Optionally, the P objects include some or all of K objects, where
the K objects are configured by the network-side device or determined by the terminal, and K is an integer greater than or equal to P.

Optionally, in a case that the P objects include some of the K objects, any one of the P objects meets any one of the following:
an absolute value of the timing information is greater than or equal to a second value; or
an offset value of the timing information relative to second reference timing information is greater than or equal to a third value, where
the second reference timing information is determined based on first reference timing information, the first reference timing information is H pieces of timing information of a preset object, the preset object is configured by the network-side device, specified in a protocol, or determined by the terminal, and H is a positive integer.

Optionally, the target information further includes identifier information of at least one of the objects, beams, or antenna panels corresponding to the M pieces of timing information.

Optionally, the target information is carried by any one of the following: a layer 1 measurement report or a media access control MAC control element CE.

Optionally, in a case that the layer 1 measurement report includes a reference signal resource indicator, the reference signal resource indicator corresponds to a reference signal resource of at least one first object, and the first object is any object other than a service object of the terminal.

Optionally, the layer 1 measurement report meets at least one of the following:
the layer 1 measurement report further includes the identifier information of at least one of the objects, the beams, or the antenna panels corresponding to the M pieces of timing information;
the first information is placed in the layer 1 measurement report according to a first rule, where the first rule is used for determining at least one of the objects, the beams, or the antenna panels corresponding to the M pieces of timing information; or
in a case that the layer 1 measurement report includes a reference signal resource indicator, a correspondence exists between the M pieces of timing information and the reference signal resource indicator.

Optionally, the MAC CE meets any one of the following:
the MAC CE is a MAC CE in a first format, and the MAC CE in the first format carries the target information through a first field; or
the MAC CE is a MAC CE in a second format, and the MAC CE in the second format is configured to carry the target information.

Optionally, the radio frequency unit 701 is further configured to:
receive Q TAs transmitted by the network-side device; and
the processor 710 is configured to:
determine the TA of each of K objects according to the Q TAs and/or at least one of the M pieces of timing information, where
the K objects are configured by the network-side device or determined by the terminal, K is a positive integer, and Q is a positive integer less than or equal to K.

Optionally, the Q TAs meet any one of the following:
the Q TAs include only the TA of a preset object, where the preset object is configured by the network-side device, specified in a protocol, or determined by the terminal;
the Q TAs include the TA of each of the K objects; or
the Q TAs include only the TAs of the objects corresponding to the M pieces of timing information.

Optionally, the processor 710 is further configured to:
determine, according to the target information, whether to perform a transmitting or receiving operation for second information of a second object, where
the second object is a service object of the terminal, and the second information includes at least one of a channel or a reference signal.

Optionally, the processor 710 is further configured to any one of the following:
stop performing the transmitting or receiving operation for the second information of the second object within a target time period; or
perform the transmitting or receiving operation for the second information of the second object within the target time period in a case that a second condition is met, where
the target time period meets at least one of the following: a first start time of the target time period is before a second start time of a transmission and receiving time of third information of a first object; or a first end time of the target time period is after a second end time of the transmission and receiving time of the third information of the first object; the first object is any object other than the second object; and the third information includes at least one of a channel or a reference signal, or is a reference signal used for measuring the timing information.

Optionally, the second condition meets any one of the following:
the terminal performs a transmitting or receiving operation for at least one of the third information of the first object or the second information of the second object in a frequency band of a frequency range 1;
the third information of the first object and the second information of the second object meet a quasi co-location relation, or have the same spatial relation, or correspond to the same source reference signal; or
the terminal supports simultaneously performing transmitting or receiving operations for the third information of the first object and the second information of the second obj ect.

Optionally, in a case that the second condition meets that the terminal supports simultaneously performing transmitting or receiving operations for the third information of the first object and the second information of the second object, the second condition being met further includes any one of the following:
the terminal includes at least one antenna panel; or
the second information and the third information are determined by the network-side device according to a group based beam report.

Optionally, T1 and T2 are determined based on the timing information of the first object and the second object, where
T1 is a time interval between the first start time and the second start time, and T2 is a time interval between the first end time and the second end time.

Optionally, the second information is repeatedly transmitted information.

It should be noted that the terminal 700 in this embodiment can implement various processes in the method embodiment of FIG. 2 in the embodiments of the present invention, and achieve the same technical effects. To avoid repetition, details are not described herein again.

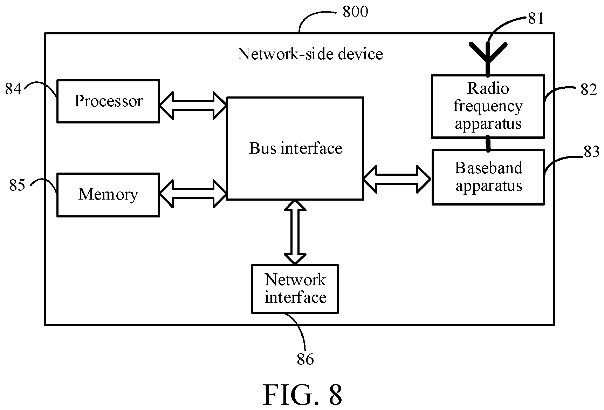

Specifically, an embodiment of the present application further provides a network-side device. As shown in FIG. 8, the network-side device 800 includes an antenna 81, a radio frequency apparatus 82, and a baseband apparatus 83. The antenna 81 is connected to the radio frequency apparatus 82. In an uplink direction, the radio frequency apparatus 82 receives information through the antenna 81, and transmits the received information to the baseband apparatus 83 for processing. In a downlink direction, the baseband apparatus 83 processes information to be transmitted, and transmits the information to the radio frequency apparatus 82. The radio frequency apparatus 82 processes the received information and then transmits the processed information out through the antenna 81.

The frequency band processing apparatus may be in the baseband apparatus 83, and the method performed by the network-side device in the foregoing embodiment may be implemented in the baseband apparatus 83, and the baseband apparatus 83 includes a processor 84 and a memory 85.

The baseband apparatus 83 may include, for example, at least one baseband plate. A plurality of chips are disposed on the baseband plate. As shown in FIG. 8, one of the plurality of chips is, for example, the processor 84, and is connected to the memory 85, to invoke a program in the memory 85 to perform operations of the network-side device shown in the foregoing method embodiment.

The baseband apparatus 83 may further include a network interface 86, configured to exchange information with the radio frequency apparatus 82. The interface is, for example, a common public radio interface (common public radio interface, CPRI).

Specifically, the network-side device in this embodiment of the present invention further include: instructions or a program stored in the memory 85 and runnable on the processor 84, where the processor 84 invokes the instructions or program in the memory 85 to implement the various processes in the method embodiment of FIG. 3, and can achieve the same technical effects. To avoid repetition, details are not described herein again.

An embodiment of the present invention further provides a computer-readable storage medium, storing a computer program, where the computer program, when executed by a processor, implements various processes of the foregoing embodiments of the information reporting method, and the same technical effect can be achieved. To avoid repetition, details are not repeated herein. The computer-readable storage medium is, for example, a read-only memory (Read-Only Memory, ROM), a random access memory (Random Access Memory, RAM), a magnetic disk, an optical disc, or the like.

An embodiment of the present application further provides a readable storage medium, storing a program or instructions, the program or instructions, when executed by a processor, implementing processes of the foregoing method embodiments of FIG. 2 and FIG. 3, and the same technical effects can be achieved. To avoid repetition, details are not repeated herein.

The processor is the processor in the terminal in the foregoing embodiments. The readable storage medium includes a computer-readable storage medium, and may be, for example, a read-only memory (Read-Only Memory, ROM), a random access memory (Random Access Memory, RAM), a magnetic disk, or an optical disc.

An embodiment of the present application further provides a chip, including a processor and a communication interface, where the communication interface is coupled to the processor, and the processor is configured to run a program or instructions of a network-side device to implement all processes of the foregoing method embodiments of FIG. 2 and FIG. 3, and the same technical effects can be achieved. To avoid repetition, details are not repeated herein.

It should be understood that, the chip mentioned in the embodiments of the present application may also be referred to as a system-level chip, a system chip, a chip system, a system on chip, or the like.

It is to be noted that, the terms "include", "comprise", or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "comprising one" does not exclude that there are still other same elements in the processes, methods, objects, or apparatuses. In addition, it should be noted that the scope of the methods and apparatuses in the implementations of the present application is not limited to performing functions in the shown or discussed order, and may further include performing functions in a substantially simultaneous manner or in a reverse order according to the functions involved. For example, the described methods may be performed in an order different from that described, and various steps may be added, omitted, or combined. In addition, features described with reference to some examples may also be combined in other examples.

A person of ordinary skill in the art may notice that the exemplary units and algorithm steps described with reference to the embodiments disclosed in this specification can be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but such implementation is not to be considered beyond the scope of the present disclosure.

A person skilled in the art may clearly understand that for convenience and conciseness of description, for specific working processes of the foregoing systems, apparatuses and units, reference may be made to the corresponding processes in the foregoing method embodiments, and details are not described herein again.

In the embodiments provided in the present application, it is to be understood that the disclosed apparatus and method may be implemented in other manners. For example, the described apparatus embodiments are merely exemplary. For example, the unit division is merely logical function division and may be other division during actual implementation. For example, a plurality of units or components may be combined or integrated into another system, or some features may be omitted or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to an actual requirement to achieve the objectives of the solutions in the embodiments.

In addition, functional units in the embodiments of the present disclosure may be integrated into one processing unit, or each of the units may be physically separated, or two or more units may be integrated into one unit.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of the present application essentially or the part contributing to the prior art may be implemented in the form of a software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of the present application.

It may be understood that the embodiments described in the embodiments of the present disclosure may be implemented by hardware, software, firmware, middleware, microcode, or a combination thereof. For hardware implementation, modules, units, and subunits may be implemented in one or more application-specific integrated circuits (Application Specific Integrated Circuits, ASIC), a digital signal processor (Digital Signal Processor, DSP), a digital signal processing device (DSP Device, DSPD), a programmable logic device (Programmable Logic Device, PLD), a field-programmable gate array (Field-Programmable Gate Array, FPGA), a general purpose processor, a controller, a micro-controller, a microprocessor, and other electronic units configured to execute the functions in the present disclosure, or a combination of the above.

For software implementation, the technologies in the embodiments of the present disclosure may be implemented by performing the functional modules (for example, a process and a function) in the embodiments of the present disclosure. Software code may be stored in a memory and executed by a processor. The memory may be implemented inside or outside the processor.

The embodiments of the present application are described above with reference to the accompanying drawings. However, the present application is not limited to the foregoing specific implementations. The foregoing specific implementations are merely illustrative rather than limitative. A person of ordinary skill in the art may derive various forms from the present application without departing from the spirit of the present application and the scope claimed by the claims, which are fall within the protection of the present application.

## Claims

1. An information reporting method, performed by a terminal, the method comprising:
reporting target information to a network-side device, wherein the target information comprises first information, and the first information corresponds to M pieces of timing information of P objects, wherein
the objects are cells, physical cells, or transmission and reception points TRPs, M is a positive integer, and P is a positive integer less than or equal to M.

2. The method according to claim 1, wherein the reporting target information to a network-side device comprises:
reporting the target information to the network-side device in a case that a first condition is met, wherein
the first condition being met comprises at least one of the following:
at least two pieces of TRP identifier information are configured on the network-side device;
at least two cells or physical cells are configured or activated on the network-side device;
a difference between the timing information of at least two objects is greater than or equal to a first value;
carrying timing information of objects in a layer 1 measurement report is configured or triggered on the network-side device; or
an uplink resource used for reporting the timing information of the objects is configured on the network-side device.

3. The method according to claim 2, wherein in a case that the first condition being met comprises that at least two pieces of TRP identifier information are configured on the network-side device, the first condition being met further comprises any one of the following:
the at least two pieces of TRP identifier information correspond to at least two cell identifiers; or
the at least two pieces of TRP identifier information correspond to at least two physical cell identifiers.

4. The method according to claim 2, wherein in a case that the first condition being met comprises that a difference between the timing information of at least two objects is greater than or equal to a first value, whether the difference between the timing information of the at least two objects is greater than or equal to the first value is determined based on results of measuring reference signals of the at least two objects by the terminal, wherein
the reference signals of the at least two objects are measured by using at least one of the following: at least two antenna panels or at least two beams.

5. The method according to claim 1, wherein the first information comprises any one of the following:
the M pieces of timing information;
absolute values of the M pieces of timing information;
M-H offset values; or
M-H offset values and first reference timing information, wherein
the M-H offset values comprise an offset value of each of M-H pieces of timing information relative to second reference timing information, the M-H pieces of timing information comprise timing information in the M pieces of timing information other than the first reference timing information, and the second reference timing information is determined based on the first reference timing information; and the first reference timing information is H pieces of timing information of a preset object, the preset object is configured by the network-side device, specified in a protocol, or determined by the terminal, and H is a positive integer.

6. The method according to claim 5, wherein the first information is represented by using a quantized value.

7. The method according to claim 6, wherein in a case that the first information comprises the M-H offset values, the first information comprises:
M-H quantized values corresponding to the M-H offset values, wherein
a symbol of a first quantized value is used for representing a relationship between the timing information corresponding to the first quantized value and the second reference timing information, and the first quantized value is any one of the M-H quantized values.

8. The method according to claim 1, wherein the M pieces of timing information of the P objects meet any one of the following:
each of the P objects corresponds to one piece of timing information in a case that P is equal to M; or
at least one of the P objects corresponds to at least two pieces of timing information in a case that P is less than M, wherein the at least two pieces of timing information are measured by using at least one of the following: at least two beams or at least two antenna panels.

9. The method according to claim 1, wherein in a case that the P objects comprise a target object corresponding to L pieces of timing information, and L is an integer greater than 1, the M pieces of timing information comprise J pieces of timing information corresponding to the target object, a value of J is determined based on a capability of the terminal, and J is a positive integer less than or equal to L.

10. The method according to claim 9, wherein the value of J meets any one of the following:
J is greater than 1 and less than or equal to L in a case that the terminal supports a plurality of active antenna panels or beam transmissions, and supports at least two timing information processing capabilities or at least two timing advances TA; or
J is equal to 1 in a case that the terminal supports only a single active antenna panel, a single active beam transmission, a single timing information processing capability, or a single TA.

11. The method according to claim 1, wherein the P objects comprise some or all of K objects, wherein
the K objects are configured by the network-side device or determined by the terminal, and K is an integer greater than or equal to P.

12. The method according to claim 11, wherein in a case that the P objects comprise some of the K objects, any one of the P objects meets any one of the following:
an absolute value of the timing information is greater than or equal to a second value; or
an offset value of the timing information relative to second reference timing information is greater than or equal to a third value, wherein
the second reference timing information is determined based on first reference timing information, the first reference timing information is H pieces of timing information of a preset object, the preset object is configured by the network-side device, specified in a protocol, or determined by the terminal, and H is a positive integer.

13. The method according to claim 1, wherein the target information further comprises identifier information of at least one of the objects, beams, or antenna panels corresponding to the M pieces of timing information.

14. The method according to claim 1 or 13, wherein the target information is carried by any one of the following: a layer 1 measurement report or a media access control MAC control element CE.

15. The method according to claim 14, wherein in a case that the layer 1 measurement report comprises a reference signal resource indicator, the reference signal resource indicator corresponds to a reference signal resource of at least one first object, and the first object is any object other than a service object of the terminal.

16. The method according to claim 14, wherein the layer 1 measurement report meets at least one of the following:
the layer 1 measurement report further comprises the identifier information of at least one of the objects, the beams, or the antenna panels corresponding to the M pieces of timing information;
the first information is placed in the layer 1 measurement report according to a first rule, wherein the first rule is used for determining at least one of the objects, the beams, or the antenna panels corresponding to the M pieces of timing information; or
in a case that the layer 1 measurement report comprises a reference signal resource indicator, a correspondence exists between the M pieces of timing information and the reference signal resource indicator.

17. The method according to claim 14, wherein the MAC CE meets any one of the following:
the MAC CE is a MAC CE in a first format, and the MAC CE in the first format carries the target information through a first field; or
the MAC CE is a MAC CE in a second format, and the MAC CE in the second format is configured to carry the target information.

18. The method according to claim 1, wherein after the reporting target information to a network-side device, the method further comprises:
receiving Q TAs transmitted by the network-side device; and
determining the TA of each of K objects according to the Q TAs and/or at least one of the M pieces of timing information, wherein
the K objects are configured by the network-side device or determined by the terminal, K is a positive integer, and Q is a positive integer less than or equal to K.

19. The method according to claim 18, wherein the Q TAs meet any one of the following:
the Q TAs comprise only the TA of a preset object, wherein the preset object is configured by the network-side device, specified in a protocol, or determined by the terminal;
the Q TAs comprise the TA of each of the K objects; or
the Q TAs comprise only the TAs of the objects corresponding to the M pieces of timing information.

20. The method according to claim 1, wherein after the reporting target information to a network-side device, the method further comprises:
determining, according to the target information, whether to perform a transmitting or receiving operation for second information of a second object, wherein
the second object is a service object of the terminal, and the second information comprises at least one of a channel or a reference signal.

21. The method according to claim 20, wherein the determining, according to the target information, whether to perform a transmitting or receiving operation for second information of a second object comprises any one of the following:
stopping performing the transmitting or receiving operation for the second information of the second object within a target time period; or
performing the transmitting or receiving operation for the second information of the second object within the target time period in a case that a second condition is met, wherein
the target time period meets at least one of the following: a first start time of the target time period is before a second start time of a transmission and receiving time of third information of a first object; or a first end time of the target time period is after a second end time of the transmission and receiving time of the third information of the first object; the first object is any object other than the second object; and the third information comprises at least one of a channel or a reference signal, or is a reference signal used for measuring the timing information.

22. The method according to claim 21, wherein the second condition meets any one of the following:
the terminal performs a transmitting or receiving operation for at least one of the third information of the first object or the second information of the second object in a frequency band of a frequency range 1;
the third information of the first object and the second information of the second object meet a quasi co-location relation, or have the same spatial relation, or correspond to the same source reference signal; or
the terminal supports simultaneously performing transmitting or receiving operations for the third information of the first object and the second information of the second object.

23. The method according to claim 22, wherein in a case that the second condition meets that the terminal supports simultaneously performing transmitting or receiving operations for the third information of the first object and the second information of the second object, the second condition being met further comprises any one of the following:
the terminal comprises at least one antenna panel; or
the second information and the third information are determined by the network-side device according to a group based beam report.

24. The method according to claim 21, wherein T1 and T2 are determined based on the timing information of the first object and the second object, wherein
T1 is a time interval between the first start time and the second start time, and T2 is a time interval between the first end time and the second end time.

25. The method according to claim 21, wherein the second information is repeatedly transmitted information.

26. An information receiving method, performed by a network-side device, the method comprising:
receiving target information reported by a terminal, wherein the target information comprises first information, and the first information corresponds to M pieces of timing information of P objects, wherein
the objects are cells, physical cells, or transmission and reception points TRP, M is a positive integer, and P is a positive integer less than or equal to M.

27. The method according to claim 26, wherein the first information comprises any one of the following:
the M pieces of timing information;
absolute values of the M pieces of timing information;
M-H offset values; or
M-H offset values and first reference timing information, wherein
the M-H offset values comprise an offset value of each of M-H pieces of timing information relative to second reference timing information, the M-H pieces of timing information comprise timing information in the M pieces of timing information other than the first reference timing information, and the second reference timing information is determined based on the first reference timing information; and the first reference timing information is H pieces of timing information of a preset object, the preset object is configured by the network-side device, specified in a protocol, or determined by the terminal, and H is a positive integer.

28. The method according to claim 27, wherein the first information is represented by using a quantized value.

29. The method according to claim 28, wherein in a case that the first information comprises the M-H offset values, the first information comprises:
M-H quantized values corresponding to the M-H offset values, wherein
a symbol of a first quantized value is used for representing a relationship between the timing information corresponding to the first quantized value and the second reference timing information, and the first quantized value is any one of the M-H quantized values.

30. The method according to claim 26, wherein the M pieces of timing information of the P objects meet any one of the following:
each of the P objects corresponds to one piece of timing information in a case that P is equal to M; or
at least one of the P objects corresponds to at least two pieces of timing information in a case that P is less than M, wherein the at least two pieces of timing information are measured by using at least one of the following: at least two beams or at least two antenna panels.

31. The method according to claim 26, wherein the P objects comprise some or all of K objects, wherein
the K objects are configured by the network-side device or determined by the terminal, and K is an integer greater than or equal to P.

32. The method according to claim 31, wherein in a case that the P objects comprise some of the K objects, any one of the P objects meets any one of the following:
an absolute value of the timing information is greater than or equal to a second value; or
an offset value of the timing information relative to second reference timing information is greater than or equal to a third value, wherein
the second reference timing information is determined based on first reference timing information, the first reference timing information is H pieces of timing information of a preset object, the preset object is configured by the network-side device, specified in a protocol, or determined by the terminal, and H is a positive integer.

33. The method according to claim 26, wherein the target information further comprises identifier information of at least one of the objects, beams, or antenna panels corresponding to the M pieces of timing information.

34. The method according to claim 26 or 33, wherein the target information is carried by any one of the following: a layer 1 measurement report or a media access control MAC control element CE.

35. The method according to claim 34, wherein in a case that the layer 1 measurement report comprises a reference signal resource indicator, the reference signal resource indicator corresponds to a reference signal resource of at least one first object, and the first object is any object other than a service object of the terminal.

36. The method according to claim 35, wherein the layer 1 measurement report meets at least one of the following:
the layer 1 measurement report further comprises the identifier information of at least one of the objects, the beams, or the antenna panels corresponding to the M pieces of timing information;
the first information is placed in the layer 1 measurement report according to a first rule, wherein the first rule is used for determining at least one of the objects, the beams, or the antenna panels corresponding to the M pieces of timing information; or
in a case that the layer 1 measurement report comprises a reference signal resource indicator, a correspondence exists between the M pieces of timing information and the reference signal resource indicator.

37. The method according to claim 35, wherein the MAC CE meets any one of the following:
the MAC CE is a MAC CE in a first format, and the MAC CE in the first format carries the target information through a first field; or
the MAC CE is a MAC CE in a second format, and the MAC CE in the second format is configured to carry the target information.

38. The method according to claim 26, wherein after the receiving target information reported by a terminal, the method further comprises:
transmitting Q TAs to the terminal, Q being a positive integer.

39. The method according to claim 38, wherein the Q TAs meet any one of the following:
the Q TAs comprise only the TA of a preset object, wherein the preset object is configured by the network-side device, specified in a protocol, or determined by the terminal;
the Q TAs comprise the TA of each of K objects, the K objects being configured by the network-side device or determined by the terminal, and K being a positive integer; or
the Q TAs comprise only the TAs of the objects corresponding to the M pieces of timing information.

40. The method according to claim 26, wherein after the receiving target information reported by a terminal, the method further comprises:
controlling a transmitting or receiving operation for second information of a second object according to the target information; wherein
the second object is a service object of the terminal, and the second information comprises at least one of a channel or a reference signal.

41. The method according to claim 40, wherein the controlling a transmitting or receiving operation for second information of a second object according to the target information comprises any one of the following:
stopping performing the transmitting or receiving operation for the second information of the second object within a target time period; or
performing the transmitting or receiving operation for the second information of the second object within the target time period in a case that a second condition is met, wherein
the target time period meets at least one of the following: a first start time of the target time period is before a second start time of a transmission and receiving time of third information of a first object; or a first end time of the target time period is after a second end time of the transmission and receiving time of the third information of the first object; the first object is any object other than the second object; and the third information comprises at least one of a channel or a reference signal, or is a reference signal used for measuring the timing information.

42. The method according to claim 41, wherein the second condition meets any one of the following:
the terminal performs a transmitting or receiving operation for at least one of the third information of the first object or the second information of the second object in a frequency band of a frequency range 1;
the third information of the first object and the second information of the second object meet a quasi co-location relation, or have the same spatial relation, or correspond to the same source reference signal; or
the terminal supports simultaneously performing transmitting or receiving operations for the third information of the first object and the second information of the second object.

43. The method according to claim 42, wherein in a case that the second condition meets that the terminal supports simultaneously performing transmitting or receiving operations for the third information of the first object and the second information of the second object, the second condition being met further comprises any one of the following:
the terminal comprises at least one antenna panel; or
the second information and the third information are determined by the network-side device according to a group based beam report.

44. The method according to claim 41, wherein T1 and T2 are determined based on the timing information of the first object and the second object, wherein
T1 is a time interval between the first start time and the second start time, and T2 is a time interval between the first end time and the second end time.

45. The method according to claim 40, wherein the second information is repeatedly transmitted information.

46. An information reporting apparatus, comprising:
a reporting module, configured to report target information to a network-side device, wherein the target information comprises first information, and the first information corresponds to M pieces of timing information of P objects, wherein
the objects are cells, physical cells, or transmission and reception points TRP, M is a positive integer, and P is a positive integer less than or equal to M.

47. The information reporting apparatus according to claim 46, wherein the reporting module is further configured to:
report the target information to the network-side device in a case that a first condition is met, wherein
the first condition being met comprises at least one of the following:
at least two pieces of TRP identifier information are configured on the network-side device;
at least two cells or physical cells are configured or activated on the network-side device;
a difference between the timing information of at least two objects is greater than or equal to a first value;
carrying timing information of objects in a layer 1 measurement report is configured or triggered on the network-side device; or
an uplink resource used for reporting the timing information of the objects is configured on the network-side device.

48. The information reporting apparatus according to claim 46, wherein the first information comprises any one of the following:
the M pieces of timing information;
absolute values of the M pieces of timing information;
M-H offset values; or
M-H offset values and first reference timing information, wherein
the M-H offset values comprise an offset value of each of M-H pieces of timing information relative to second reference timing information, the M-H pieces of timing information comprise timing information in the M pieces of timing information other than the first reference timing information, and the second reference timing information is determined based on the first reference timing information; and the first reference timing information is H pieces of timing information of a preset object, the preset object is configured by the network-side device, specified in a protocol, or determined by the terminal, and H is a positive integer.

49. The information reporting apparatus according to claim 46, wherein the M pieces of timing information of the P objects meet any one of the following:
each of the P objects corresponds to one piece of timing information in a case that P is equal to M; or
at least one of the P objects corresponds to at least two pieces of timing information in a case that P is less than M, wherein the at least two pieces of timing information are measured by using at least one of the following: at least two beams or at least two antenna panels.

50. The information reporting apparatus according to claim 46, wherein the P objects comprise some or all of K objects, wherein
the K objects are configured by the network-side device or determined by the terminal, and K is an integer greater than or equal to P.

51. The information reporting apparatus according to claim 50, wherein in a case that the P objects comprise some of the K objects, any one of the P objects meets any one of the following:
an absolute value of the timing information is greater than or equal to a second value; or
an offset value of the timing information relative to second reference timing information is greater than or equal to a third value, wherein
the second reference timing information is determined based on first reference timing information, the first reference timing information is H pieces of timing information of a preset object, the preset object is configured by the network-side device, specified in a protocol, or determined by the terminal, and H is a positive integer.

52. The information reporting apparatus according to claim 46, wherein the target information further comprises identifier information of at least one of the objects, beams, or antenna panels corresponding to the M pieces of timing information.

53. The information reporting apparatus according to claim 46 or 52, wherein the target information is carried by any one of the following: a layer 1 measurement report or a media access control MAC control element CE.

54. The information reporting apparatus according to claim 46, further comprising:
a first receiving module, configured to receive Q TAs transmitted by the network-side device; and
a first determining module, configured to determine the TA of each of K objects according to the Q TAs and/or at least one of the M pieces of timing information, wherein
the K objects are configured by the network-side device or determined by the terminal, K is a positive integer, and Q is a positive integer less than or equal to K.

55. The information reporting apparatus according to claim 54, wherein the Q TAs meet any one of the following:
the Q TAs comprise only the TA of a preset object, wherein the preset object is configured by the network-side device, specified in a protocol, or determined by the terminal;
the Q TAs comprise the TA of each of the K objects; or
the Q TAs comprise only the TAs of the objects corresponding to the M pieces of timing information.

56. The information reporting apparatus according to claim 46, further comprising:
a second determining module, configured to determine, according to the target information, whether to perform a transmitting or receiving operation for second information of a second object, wherein
the second object is a service object of the terminal, and the second information comprises at least one of a channel or a reference signal.

57. The information reporting apparatus according to claim 56, wherein the second determining module is further configured to any one of the following:
stop performing the transmitting or receiving operation for the second information of the second object within a target time period; or
perform the transmitting or receiving operation for the second information of the second object within the target time period in a case that a second condition is met, wherein
the target time period meets at least one of the following: a first start time of the target time period is before a second start time of a transmission and receiving time of third information of a first object; or a first end time of the target time period is after a second end time of the transmission and receiving time of the third information of the first object; the first object is any object other than the second object; and the third information comprises at least one of a channel or a reference signal, or is a reference signal used for measuring the timing information.

58. The information reporting apparatus according to claim 57, wherein the second condition meets any one of the following:
the terminal performs a transmitting or receiving operation for at least one of the third information of the first object or the second information of the second object in a frequency band of a frequency range 1;
the third information of the first object and the second information of the second object meet a quasi co-location relation, or have the same spatial relation, or correspond to the same source reference signal; or
the terminal supports simultaneously performing transmitting or receiving operations for the third information of the first object and the second information of the second object.

59. An information receiving apparatus, comprising:
a second receiving module, configured to receive target information reported by a terminal, wherein the target information comprises first information, and the first information corresponds to M pieces of timing information of P objects, wherein
the objects are cells, physical cells, or transmission and reception points TRP, M is a positive integer, and P is a positive integer less than or equal to M.

60. The information receiving apparatus according to claim 59, wherein the target information further comprises identifier information of at least one of the objects, beams, or antenna panels corresponding to the M pieces of timing information.

61. The information receiving apparatus according to claim 59 or 60, wherein the target information is carried by any one of the following: a layer 1 measurement report or a media access control MAC control element CE.

62. The information receiving apparatus according to claim 60, further comprising:
a transmission module, configured to transmit Q TAs to the terminal, Q being a positive integer.

63. The information receiving apparatus according to claim 62, wherein the Q TAs meet any one of the following:
the Q TAs comprise only the TA of a preset object, wherein the preset object is configured by the network-side device, specified in a protocol, or determined by the terminal;
the Q TAs comprise the TA of each of K objects, the K objects being configured by the network-side device or determined by the terminal, and K being a positive integer; or
the Q TAs comprise only the TAs of the objects corresponding to the M pieces of timing information.

64. The information receiving apparatus according to claim 59, further comprising:
a control module, configured to control a transmitting or receiving operation for second information of a second object according to the target information; wherein
the second object is a service object of the terminal, and the second information comprises at least one of a channel or a reference signal.

65. The information receiving apparatus according to claim 64, wherein the control module is further configured to any one of the following:
stop performing the transmitting or receiving operation for the second information of the second object within a target time period; or
perform the transmitting or receiving operation for the second information of the second object within the target time period in a case that a second condition is met, wherein
the target time period meets at least one of the following: a first start time of the target time period is before a second start time of a transmission and receiving time of third information of a first object; or a first end time of the target time period is after a second end time of the transmission and receiving time of the third information of the first object; the first object is any object other than the second object; and the third information comprises at least one of a channel or a reference signal, or is a reference signal used for measuring the timing information.

66. The information receiving apparatus according to claim 65, wherein the second condition meets any one of the following:
the terminal performs a transmitting or receiving operation for at least one of the third information of the first object or the second information of the second object in a frequency band of a frequency range 1;
the third information of the first object and the second information of the second object meet a quasi co-location relation, or have the same spatial relation, or correspond to the same source reference signal; or
the terminal supports simultaneously performing transmitting or receiving operations for the third information of the first object and the second information of the second object.

67. A terminal, comprising a processor, a memory, and a program or instructions stored in the memory and runnable on the processor, the program or instructions, when executed by the processor, implementing steps of the information reporting method according to any one of claims 1 to 25.

68. A network-side device, comprising a processor, a memory, and a program or instructions stored in the memory and runnable on the processor, the program or instructions, when executed by the processor, implementing steps of the information receiving method according to any one of claims 26 to 45.

69. A readable storage medium, storing a program or instructions, the program or instructions, when executed by a processor, implementing steps of the information reporting method according to any one of claims 1 to 25, or implementing steps of the information receiving method according to any one of claims 26 to 45.

70. A chip, comprising a processor and a communication interface, the communication interface being coupled to the processor, and the processor being configured to run a program or instructions of a network-side device, to implement the information reporting method according to any one of claims 1 to 25, or implement the information receiving method according to any one of claims 26 to 45.

71. A computer software product, stored in a non-volatile storage medium, and configured to be executed by at least one processor to implement steps of the information reporting method according to any one of claims 1 to 25, or implement steps of the information receiving method according to any one of claims 26 to 45.

72. A communication device, configured to perform the information reporting method according to any one of claims 1 to 25, or perform the information receiving method according to any one of claims 26 to 45.
